(19) Europäisches Patentamt
European Patent Office
Office européen des brevets

(11) **EP 4 474 568 A1**

(12) **EUROPEAN PATENT APPLICATION**

(43) Date of publication:
**11.12.2024 Bulletin 2024/50**

(21) Application number: **24179213.4**

(22) Date of filing: **31.05.2024**

(51) International Patent Classification (IPC):
**D06P 1/44** (2006.01)     **B41M 5/00** (2006.01)
**C09D 11/40** (2014.01)     **C09D 11/54** (2014.01)
**D06P 1/52** (2006.01)     **D06P 5/00** (2006.01)
**D06P 5/06** (2006.01)     **D06P 5/08** (2006.01)
**D06P 5/30** (2006.01)

(52) Cooperative Patent Classification (CPC):
**D06P 5/30; B41M 5/0017; C09D 11/38;
C09D 11/40; C09D 11/54; D06P 1/44;
D06P 1/5257; D06P 1/5285; D06P 1/5292;
D06P 5/002; D06P 5/06; D06P 5/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.06.2023 JP 2023091587**

(71) Applicant: **Seiko Epson Corporation
Tokyo 160-8801 (JP)**

(72) Inventors:
• **MIYASA, Ryota
  Suwa-shi, 392-8502 (JP)**
• **SAKUMA, Daisuke
  Suwa-shi, 392-8502 (JP)**
• **CHIDATE, Kosuke
  Suwa-shi, 392-8502 (JP)**
• **YAMADA, Akiko
  Suwa-shi, 392-8502 (JP)**

(74) Representative: **Lewis Silkin LLP
Arbor
255 Blackfriars Road
London SE1 9AX (GB)**

(54) **RECORDING METHOD AND COMPOSITION SET**

(57) A recording method including a softening liquid attachment step of attaching a softening liquid composition containing a softening agent and water to a recording medium, and a coating liquid attachment step of attaching a coating liquid composition containing anionic resin particles and water to the recording medium, in which a content of the softening agent is 60% by mass or more with respect to a total amount of non-volatile components in the softening liquid composition, a content of the resin particles is 80% by mass or more with respect to a total amount of non-volatile components in the coating liquid composition, the coating liquid attachment step is performed by an ink jet method, and the softening liquid attachment step is performed by an inkjet method or a spray method.

FIG. 1

Processed by Luminess, 75001 PARIS (FR)

EP 4 474 568 A1

**Description**

The present application is based on, and claims priority from JP Application Serial Number 2023-091587, filed June 2, 2023, the disclosure of which is hereby incorporated by reference herein in its entirety.

BACKGROUND

1. Technical Field

The present disclosure relates to a recording method, and a composition set.

2. Related Art

Attempts are made to apply an ink jet method to not only recording of images on paper and the like, but also textile printing on fabrics, and various ink jet textile printing methods are investigated. An ink jet ink for textile printing contains a coloring material in order to obtain an image having a desired color, and as the coloring material, dyes and pigments are used. In addition, in ink jet textile printing, many investigations are conducted on inks and recording methods.
For example, JP-A-2022-003175 describes the use of organopolysiloxane in inkjet textile printing for the purpose of enhancing the fastness of an image using a pigment and improving the texture of recorded matter.
Pigment textile printing is inferior to dye textile printing in terms of wet rubbing fastness of an image and texture of a printed textile, and improvements thereof are required. In addition, ink jet pigment textile printing has a simple process compared to analog textile printing and ink jet dye textile printing, is excellent in terms of low environmental load such as drainage, and is required to maintain a simple process.

SUMMARY

According to an aspect of the present disclosure, there is provided a recording method including

a softening liquid attachment step of attaching a softening liquid composition containing a softening agent and water to a recording medium, and
a coating liquid attachment step of attaching a coating liquid composition containing anionic resin particles and water to the recording medium, in which
a content of the softening agent is 60% by mass or more with respect to a total amount of non-volatile components in the softening liquid composition,
a content of the resin particles is 80% by mass or more with respect to a total amount of non-volatile components in the coating liquid composition,
the coating liquid attachment step is performed by an ink jet method, and
the softening liquid attachment step is performed by an ink jet method or a spray method.

According to another aspect of the present disclosure, there is provided a composition set including

a softening liquid composition containing a softening agent and water, and
a coating liquid composition containing anionic resin particles and water, in which
a content of the softening agent is 60% by mass or more with respect to a total amount of non-volatile components in the softening liquid composition,
a content of the resin particles is 80% by mass or more with respect to a total amount of non-volatile components in the coating liquid composition,
the coating liquid composition is used by being discharged by an inkjet method, and
the softening liquid composition is used by being discharged by an ink jet method or a spray method.

BRIEF DESCRIPTION OF THE DRAWINGS

FIG. 1 is a schematic view illustrating a schematic overall configuration of a recording apparatus applicable to a recording method according to the present embodiment.
FIG. 2 is a schematic view illustrating an example of an array of nozzle rows of ink jet heads.
FIG. 3 is a diagram showing inks discharged from the nozzle rows in Examples and Comparative Examples.

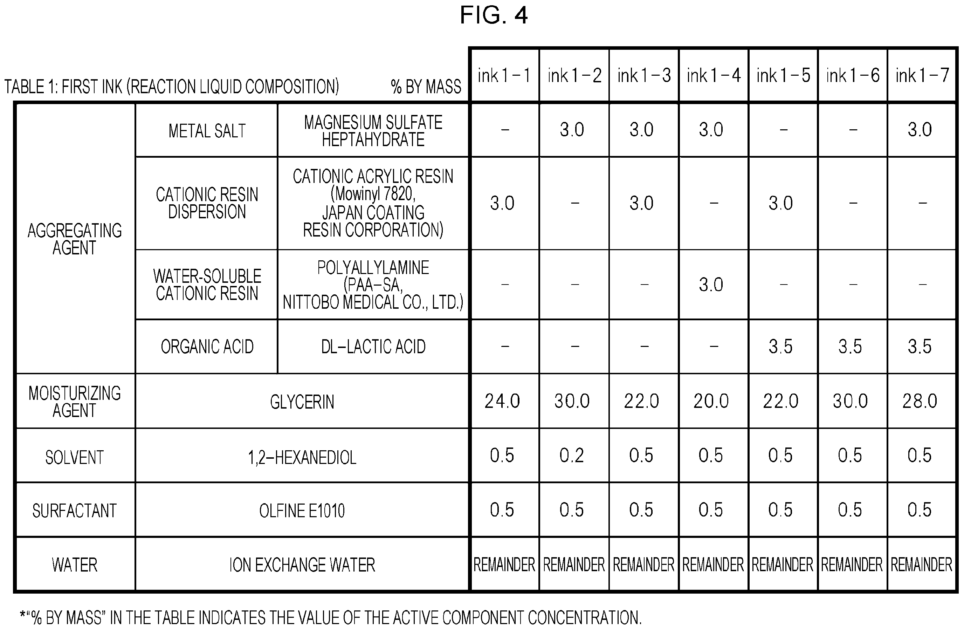

FIG. 4 is a table (Table 1) showing compositions of first inks used in Examples and Comparative Examples.

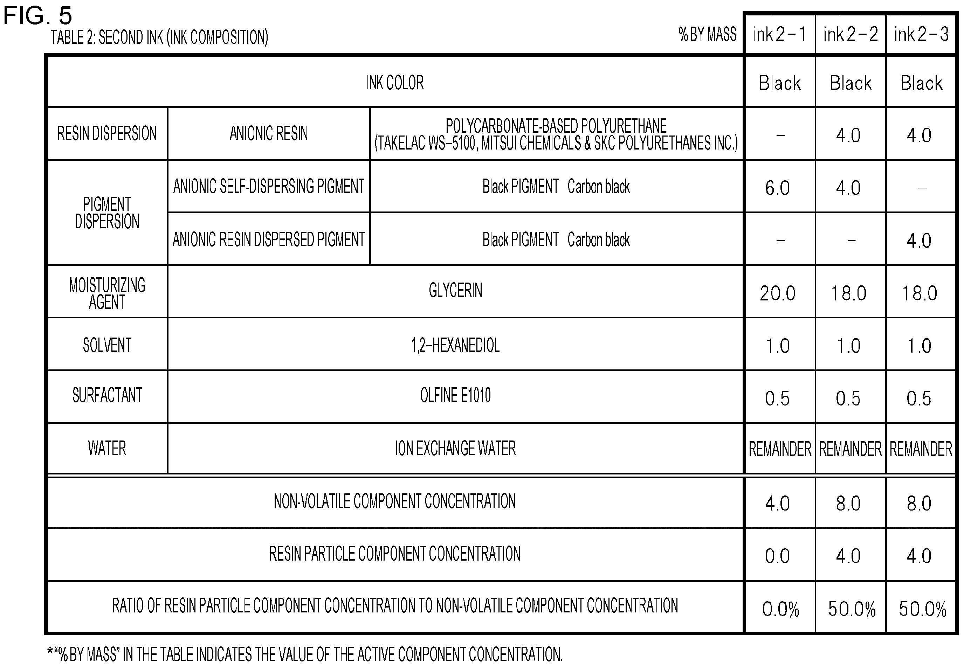

FIG. 5 is a table (Table 2) showing compositions of second inks used in Examples and Comparative Examples.

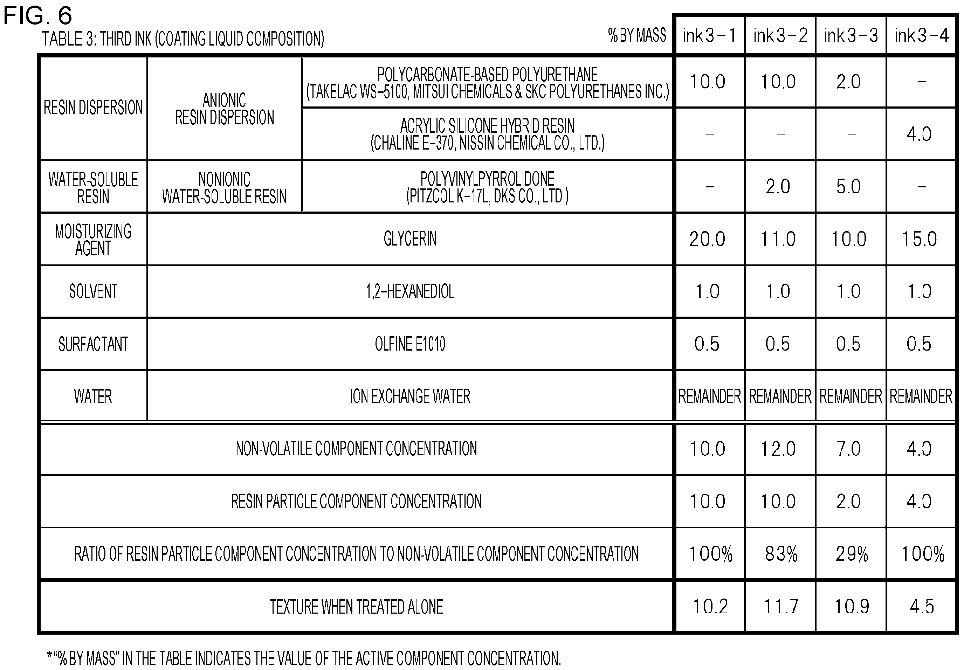

FIG. 6 is a table (Table 3) showing compositions of third inks used in Examples and Comparative Examples.

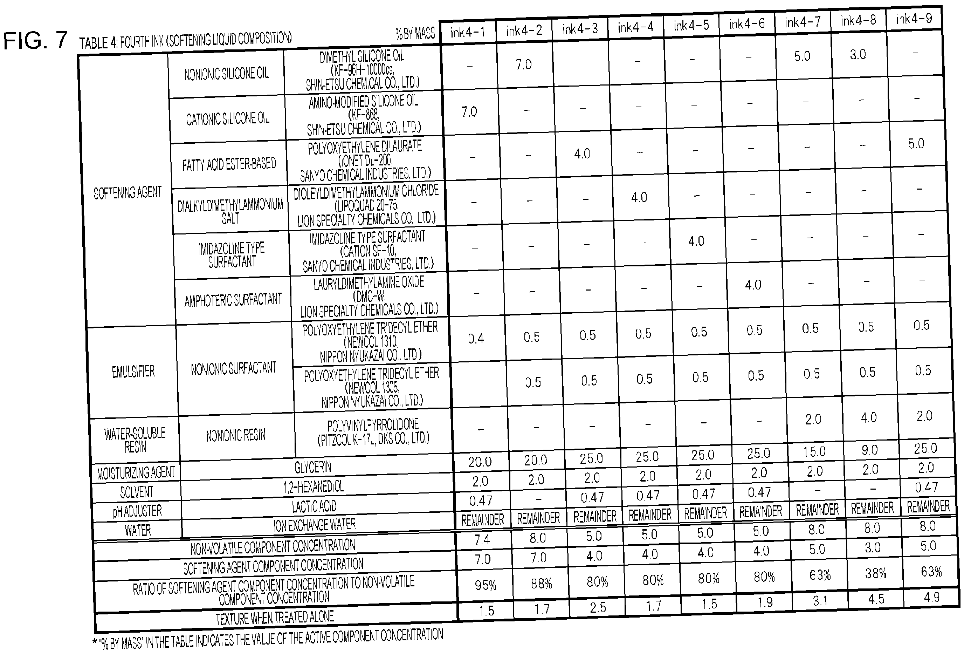

FIG. 7 is a table (Table 4) showing compositions of fourth inks used in Examples and Comparative Examples.

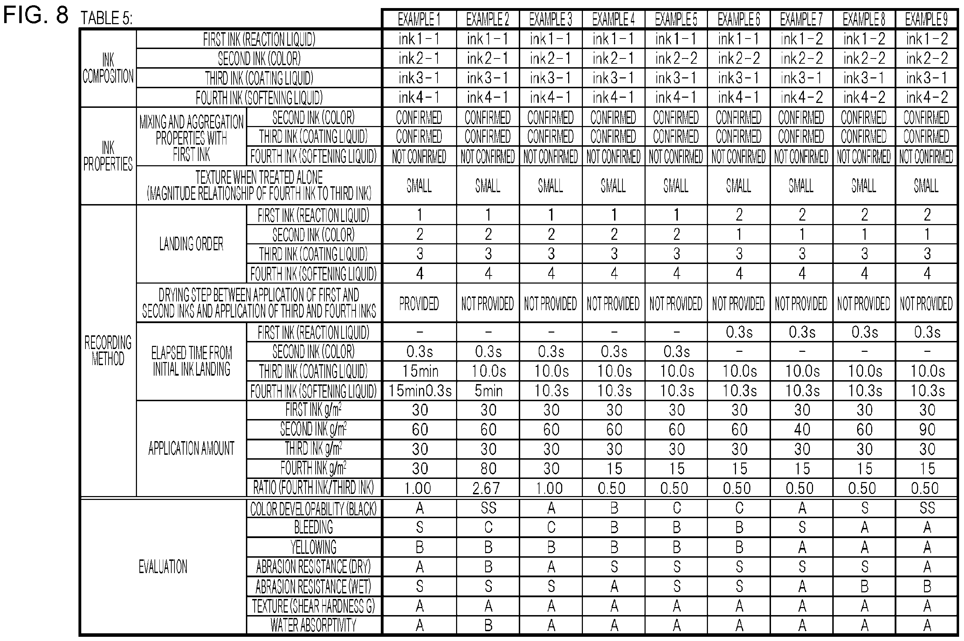

FIG. 8 is a table (Table 5) showing conditions and evaluation results according to Examples.

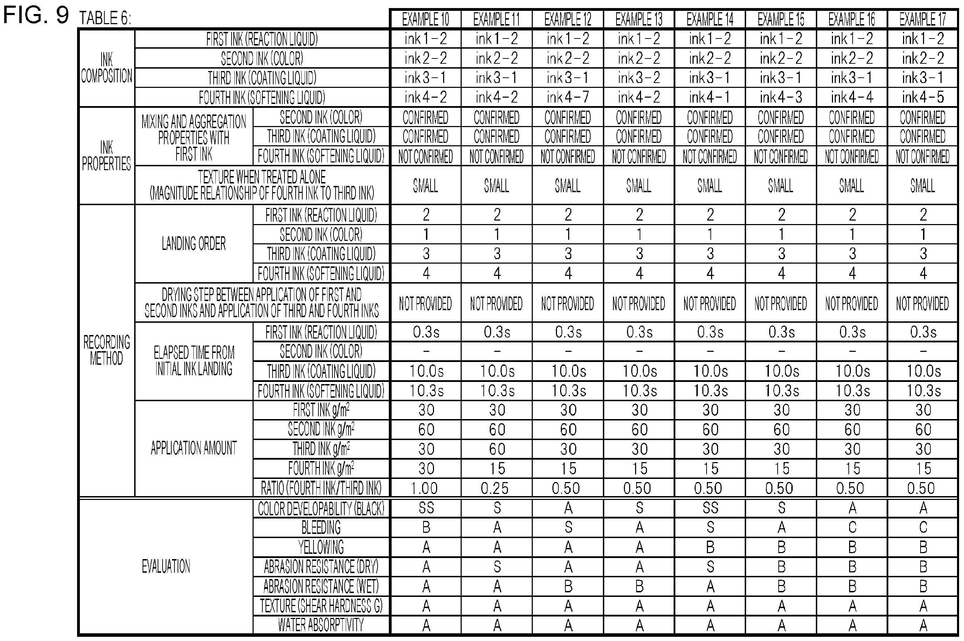

FIG. 9 is a table (Table 6) showing conditions and evaluation results according to Examples.

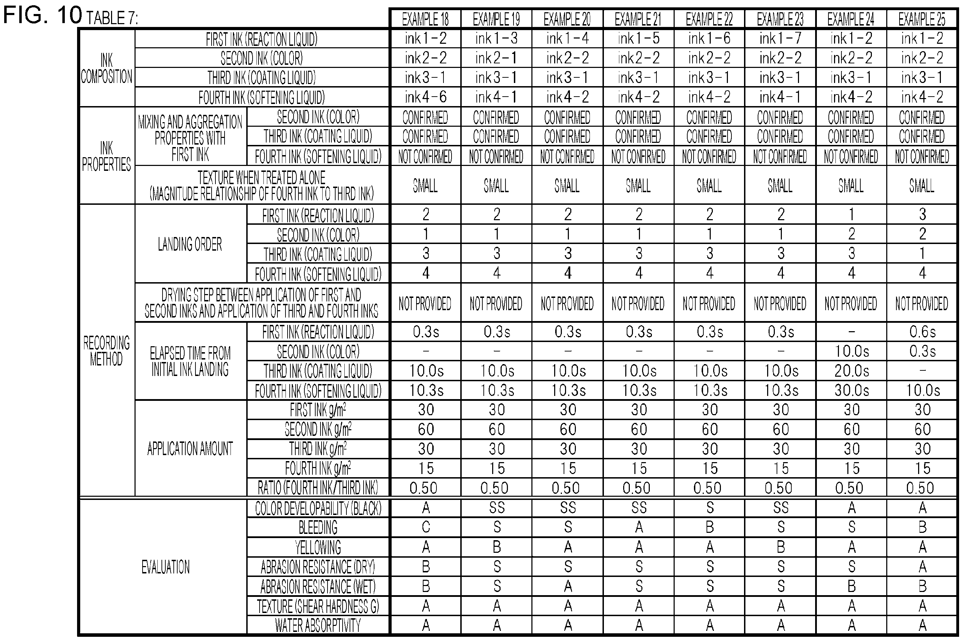

FIG. 10 is a table (Table 7) showing conditions and evaluation results according to Examples.

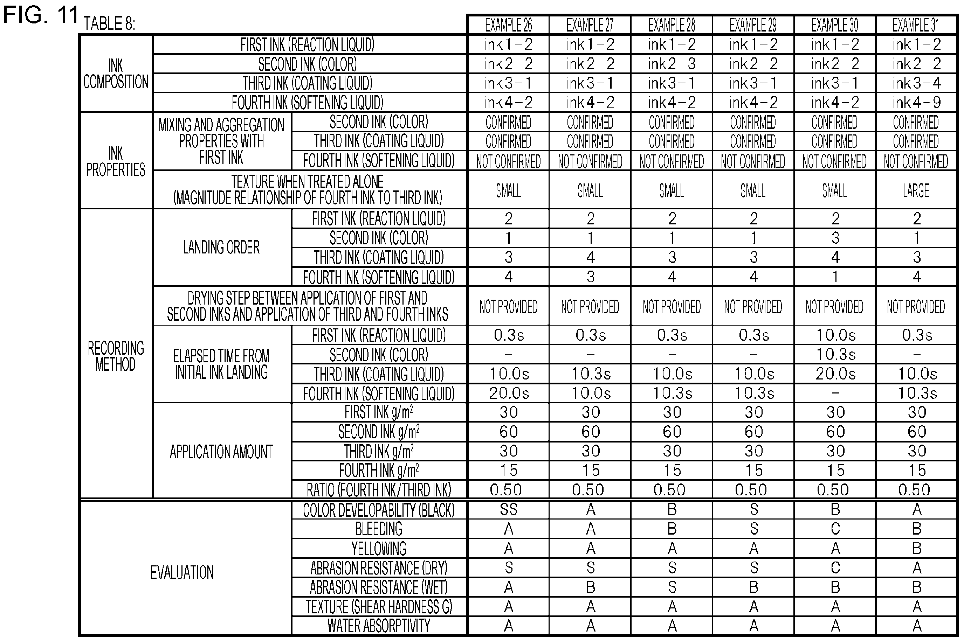

FIG. 11 is a table (Table 8) showing conditions and evaluation results according to Examples.

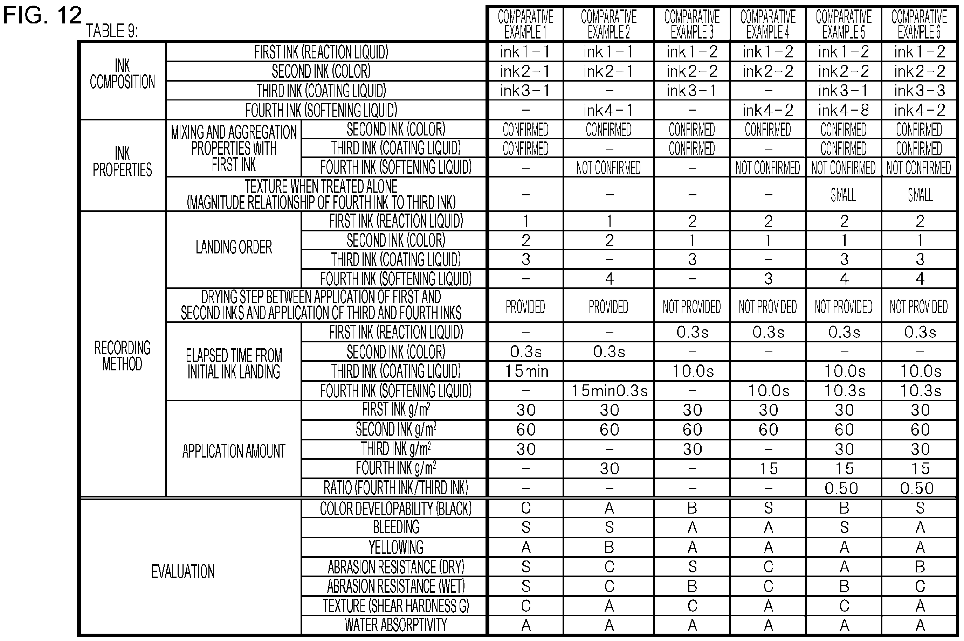

FIG. 12 is a table (Table 9) showing conditions and evaluation results of Comparative Examples.

DESCRIPTION OF EMBODIMENTS

Hereinafter, embodiments of the present disclosure will be described. The embodiments described below describe examples of the present disclosure. The present disclosure is not limited to the following embodiments, and includes various modifications implemented within a range not changing a gist of the present disclosure. It should be noted that not all of the configurations described below are essential configurations of the present disclosure.

1. Recording Method

A recording method according to the present embodiment includes a softening liquid attachment step of attaching a softening liquid composition containing a softening agent and water to a recording medium, and a coating liquid attachment step of attaching a coating liquid composition containing anionic resin particles and water to the recording medium.

1.1. Recording Medium

The recording medium to which the recording method of the present embodiment can be applied is not particularly limited. The recording medium may or may not have a recording surface that absorbs ink. Therefore, the recording medium is not particularly limited, and examples thereof include liquid absorbing recording media such as paper, film, and fabric, liquid low-absorption recording media such as printed paper, liquid non-absorption recording media such as metal, glass, and polymers, and the like.

In the recording method of the present embodiment, by using a fabric among the recording media, the effect of improving wet rubbing fastness and color developability becomes more remarkable. The fabric is not particularly limited. The material constituting the fabric is not particularly limited, examples thereof include natural fibers such as cotton, linen, wool, and silk, synthetic fibers such as polypropylene, polyester, acetate, triacetate, polyamide, and polyurethane, and biodegradable fibers such as polylactic acid, and mixed fibers thereof may be used. As the fabric, the fibers listed above may be in any form such as a woven fabric, a knitted fabric, and a nonwoven fabric, and may be mixed fibers.

1.2. Softening Liquid Attachment Step

In the softening liquid attachment step, a softening liquid composition containing a softening agent and water is attached to the recording medium.

1.2.1. Softening Liquid Composition

The softening liquid composition contains a softening agent, and water, and the content of the softening agent is 60% by mass or more with respect to the total amount of non-volatile components in the softening liquid composition.

1.2.1. 1 Softening Agent

Examples of the softening agent include particles containing organopolysiloxane, a fatty acid ester, a dialkyldimethylammonium salt, an imidazoline-type surfactant, and an amphoteric surfactant.

Particle Containing Organopolysiloxane

The particles containing organopolysiloxane are not particularly limited as long as the particles contain organopolysiloxane, and may be, for example, particles of organopolysiloxane itself or particles in a state in which the organopolysiloxane is dispersed with an emulsifier or the like. The property of the organopolysiloxane in the particles may be a solid or a liquid. For example, when an oily organopolysiloxane is dispersed in water in the form of particles by an emulsifier, the dispersed particles correspond to particles containing organopolysiloxane.

Organopolysiloxane is a generic term for organic silicon compounds having a siloxane bond "-Si($R^1R^2$)-O-" as a skeleton, in which a methyl group, a phenyl group, a vinyl group, an amino group, or the like is bonded to the siloxane bond as organic groups $R^1$ and $R^2$. Due to the chemical composition and the molecular weight, the organopolysiloxane exhibits oil-like (oily), rubber-like, or resin-like properties, and is referred to as silicone oil, silicone rubber, or silicone resin, respectively.

The organopolysiloxane used in the softening liquid composition of the present embodiment is more preferably an oily compound. When the organopolysiloxane is an oily compound, the organopolysiloxane is easily stably dispersed in the form of particles in an aqueous matrix by an emulsification treatment described below.

The molecular structure of the organopolysiloxane is not particularly limited, and a linear structure, a branched structure, a cyclic structure, a grid-like structure, a cage-like structure, and the like can be exemplified. When the molecular structure of the organopolysiloxane is an acyclic structure, usually, one or two or more groups selected from a hydrocarbon group, an alkoxy group, a hydroxyl group, a hydrogen atom, and a halogen, which may have a substituent, are bonded to the terminal Si atom of this molecule.

The organopolysiloxane is not particularly limited, and examples thereof include dimethyl silicone, alkyl-modified silicone, amino-modified silicone, epoxy-modified silicone, cyclic silicone, and methyl phenyl silicone. These may be used alone or as a mixture of two or more thereof.

In addition, as the organopolysiloxane, those commercially available as silicone oils may be used. Examples thereof include dimethyl silicone oil, methyl phenyl silicone oil, methyl hydrogen silicone oil, polyether-modified silicone oil, aralkyl-modified silicone oil, fluoroalkyl-modified silicone oil, long-chain alkyl-modified silicone oil, higher fatty acid ester-modified silicone oil, higher fatty acid amide-modified silicone oil, polyether/long-chain alkyl/aralkyl-modified silicone oil, long-chain alkyl/aralkyl-modified silicone oil, phenyl-modified silicone oil, and polyether/methoxy-modified silicone oil.

In addition, among the above-exemplified organopolysiloxanes, it is more preferable that the organopolysiloxane is a nonionic silicone. In addition, among the above-exemplified organopolysiloxanes, it is more preferable that the organopolysiloxane is an unmodified silicone. Such organopolysiloxanes are chemically more stable and are less likely to cause yellowing or the like of an image to be formed.

Further, the organopolysiloxane is more preferably one or more selected from dimethyl silicone, methyl phenyl silicone, and methyl hydrogen silicone.

Examples of commercially available products of silicone oils include dimethyl silicone (KF-96 series, manufactured by Shin-Etsu Chemical Co., Ltd.), methyl hydrogen type polysiloxane (KF-99 series, KF-9901, and the like, manufactured by Shin-Etsu Chemical Co., Ltd.), methyl phenyl silicone (KF-50 series and the like, manufactured by Shin-Etsu Chemical Co., Ltd.), amino-modified silicone (KF-868, and the like, manufactured by Shin-Etsu Chemical Co., Ltd.), and silicone-branched silicone treatment agents (KF-9908, KF-9909, and the like, manufactured by Shin-Etsu Chemical Co., Ltd.).

For example, the viscosity of the silicone at 25°C is not particularly limited, and the viscosity is preferably 1000 mPa·s or less, more preferably 50 mPa·s or more, even more preferably 500 mPa·s or more and 900 mPa·s or less, and still even more preferably 600 mPa·s or more and 700 mPa·s or less. In addition, the base oil viscosity when the silicone is emulsified and dispersed is not particularly limited, and the upper limit is preferably 1,000,000 mm$^2$/s or less, and more preferably 100,000 mm$^2$/s or less, and the lower limit is preferably 10 mm$^2$/s or more, and more preferably 100 mm$^2$/s or more. The base oil viscosity indicates the viscosity of the base oil and is a numerical value obtained by measuring the magnitude of the internal resistance of the base oil. The higher the numerical value of the base oil viscosity, the higher the viscosity, and the smaller the numerical value, the lower the viscosity of the base oil.

The organopolysiloxane may be blended in the form of particles by emulsifying various surfactants as emulsifiers. As the emulsifier at that time, for example, a nonionic surfactant, a negative ion (anionic) surfactant, a positive ion (cationic) surfactant, an amphoteric surfactant, a phospholipid, or the like can be used.

Examples of the nonionic surfactant include glycerin fatty acid esters, polyglycerin fatty acid esters, propylene glycol fatty acid esters, sorbitan fatty acid esters, fatty acid esters of sorbitol and alkylene glycol adducts thereof, polyalkylene glycol fatty acid esters, sucrose fatty acid esters, polysorbate 20, polysorbate 60, polysorbate 80, polyoxyalkylene alkyl ethers, and polyoxyethylene alkylphenyl ethers.

In addition, as the nonionic surfactant, for example, nonionic surfactants such as polyoxyethylene glycerin fatty acid ester, polyglycerin fatty acid esters, sorbitan fatty acid ester, polyoxyethylene sorbitan fatty acid ester, polyoxyethylene sorbit fatty acid ester, polyethylene glycol fatty acid ester, polyoxyethylene castor oil, polyoxyethylene hardened castor oil, polyoxyethylene phytosterol, polyoxyethylene polyoxypropylene alkyl ether, polyoxyethylene lanolin, polyoxyethylene lanolin alcohol, polyoxyethylene beeswax derivatives, polyoxyethylene alkylamine, polyoxyethylene fatty acid amide, polyoxyethylene alkylphenyl formaldehyde condensates, polyoxyethylene alkyl ether phosphoric acid (salt), and the like are suitably used.

Examples of the anionic surfactant include alkyl sulfate ester salt, polyoxyethylene alkyl sulfate ester salt, alkyl benzene sulfonate, and $\alpha$-olefin sulfonate. Examples of the cationic surfactant include alkyltrimethylammonium chloride, dialkyldimethylammonium chloride, and benzalkonium chloride. Examples of the amphoteric surfactant include alkyl dimethyl aminoacetic acid betaine, and alkyl amido dimethyl aminoacetic acid betaine. Further, naturally derived surfactants may be used, and examples thereof include lecithin, lanolin, cholesterol, and saponin.

The blending amount of the emulsifier when emulsifying the organopolysiloxane is preferably less than 20% by mass, more preferably 15% by mass or less, and particularly preferably 10% by mass or less, of the total amount of the emulsion composition.

In addition, it is desirable that the average particle diameter of the particles of the emulsified particulate organopolysiloxane is 2 $\mu$m or less, preferably 1 $\mu$m or less, and more preferably within a range of 0.05 to 0.5 $\mu$m.

Fatty Acid Ester

Examples of the fatty acid ester include polyoxyethylene monocaprate, polyoxyethylene monocaprylate, polyoxyethylene monolaurate, polyoxyethylene monomyristylate, polyoxyethylene monopalmitate, polyoxyethylene monostearate, polyoxyethylene monooleate, polyoxyethylene monostearate, polyoxyethylene monobehenate, polyoxyethylene dicaprate, polyoxyethylene dicaprylate, polyoxyethylene dilaurate, polyoxyethylene dimyristylate, polyoxyethylene dipalmitate, polyoxyethylene distearate, polyoxyethylene dioleate, polyoxyethylene diisostearate, and polyoxyethylene dibehenate.

Dialkyldimethylammonium Salt

Examples of the dialkyldimethylammonium salt include dioleoyloxytrimethylammonium propane chloride (DOTAP), dioctadecenyltrimethylammonium propane chloride (DOTMA), didecylmethylammonium chloride, didecyldimethylammonium bromide, dicocoyldimethylammonium chloride, dicocoyldimethylammonium bromide, dilauryldimethylammonium chloride, dicetyldimethylammonium chloride, dicetyldimethylammonium bromide, distearyldimethylammonium chloride, distearyldimethylammonium bromide, dioleyldimethylammonium chloride, dibehenyldimethylammonium chloride, dibehenyldimethylammonium bromide, dialkyldimethylammonium chloride, dialkyldimethylammonium bromide, dicocoylethyl hydroxyethylmonium methosulfate, dipalmitoylethyl hydroxyethylmonium methosulfate, and distearoylethylhydroxyethylmonium methosulfate.

Imidazoline-Type Surfactant

Examples of the imidazoline-type surfactant include 1-hydroxyethyl-2-lauryl imidazoline, 1-aminoethyl-2-lauryl imidazoline, 1-hydroxyethyl-2-myristyl imidazoline, 1-aminoethyl-2-myristyl imidazoline, 1-hydroxyethyl-2-palmityl imidazoline, 1-aminoethyl-2-palmityl imidazoline, 1-hydroxyethyl-2-oleyl imidazoline, 1-aminoethyl-2-oleyl imidazoline, 1-hydroxyethyl-2-stearyl imidazoline, 1-aminoethyl-2-stearyl imidazoline, 2-alkyl-N-carboxymethylimidazolinium betaine, 2-alkyl-N-carboxyethyl imidazolinium betaine, and 2-alkyl-N-carboxymethyl-N-hydroxyethylimidazolinium betaine.

Amphoteric Surfactant

Examples of the amphoteric surfactant include alkyl carboxybetaine, alkyl sulfobetaine, alkyl hydroxy sulfobetaine, alkylamide betaine, lauryl dimethylamine oxide, and lauric acid amidopropyl dimethylamine oxide.

The softening agent is preferably at least one selected from the above-exemplified particles containing organopolysiloxane, fatty acid esters, dialkyldimethylammonium salts, imidazoline-type surfactants, and amphoteric surfactants. Accordingly, the wet rubbing fastness of the image of the recorded matter formed by the recording method is further improved.

In addition, it is more preferable that the softening agent is at least one selected from particles containing organopolysiloxane. Accordingly, since a water repellent effect can be imparted to the fibers of the recording medium by the softening liquid composition, the wet rubbing fastness of the image of the recorded matter can further improved.

In addition, when the particles containing organopolysiloxane are selected as the softening agent, the organopolysiloxane is more preferably nonionic. Accordingly, the yellowing of the recorded matter can be further reduced.

1.2.1. 2 Water

The softening liquid composition includes water. Examples of water include pure water such as ion exchange water, ultrafiltered water, reverse osmosis water, and distilled water, and water such as ultrapure water, from which ionic impurities are removed as much as possible. In addition, when water sterilized by irradiation with ultraviolet rays, addition of hydrogen peroxide, or the like is used, the generation of bacteria or fungi when the composition is stored for a long period of time can be reduced.

The content of water is 30% by mass or more, preferably 40% by mass or more, more preferably 45% by mass or more, and even more preferably 50% by mass or more with respect to the total amount of the softening liquid composition. The term water in the softening liquid includes, for example, water contained in the organopolysiloxane dispersion used as a raw material and water to be added. When the water content is set to 30% by mass or more, the softening liquid composition can have a relatively low viscosity. Further, the upper limit of the content of water is preferably 90% by mass or less, more preferably 85% by mass or less, and even more preferably 80% by mass or less with respect to the total amount of the softening liquid composition. In the present specification, the term "aqueous composition" refers to a composition containing 30% by mass or more of water with respect to the total mass (100% by mass) of the composition.

1.2.1. 3 Other Components

The softening liquid composition may include an emulsifier, a resin, a moisturizing agent, other solvents, and an additive.

Emulsifier

As the emulsifier, an emulsifier for forming the above-described particles containing organopolysiloxane may be included, or the same emulsifier may be separately included.

Resin

The softening liquid composition may contain a resin. The resin is preferably a water-soluble resin. Examples of the water-soluble resin include, although not particularly limited, carboxymethyl cellulose, hydroxyethyl cellulose, polyvinylpyrrolidone, and polyethylene oxide. Among these, a nonionic resin is more preferable, and for example, polyvinylpyrrolidone is more preferable. The polyvinylpyrrolidone is not limited to a homopolymer, and a copolymer of vinylpyrrolidone and other monomers may be used. Examples of commercially available products of polyvinylpyrrolidone include polyvinyl pyrrolidone K-30 and K-30W (hereinabove, all product names, manufactured by Nippon Shokubai Co., Ltd.), PITZCOL (registered trademark) K-17L, K-30, K-30L, and K -30AL, K-60L, K-30, K-50, K-90 CREEJUS (registered trademark) K-30, and AIPHTACT (registered trademark) K-30PH (hereinabove, all product names, manufactured by DKS Co., Ltd.), and PVP K-30, PVP K-25, and PVP K-17 (trade names, manufactured by Ashland). Moisturizing Agent

The softening liquid composition may contain a moisturizing agent. The moisturizing agent is not particularly limited, and examples thereof include glycerin, 2-pyrrolidone, urea, triethanolamine, propylene glycol, 1-(2-hydroxyethyl)-2-pyrrolidone, trimethylolpropane, triethylene glycol, 1,5-pentanediol, triethylene glycol monomethyl ether, and amino coat. Among these, one moisturizing agent can be used alone or two or more thereof can be used in combination.

Other Solvents

The softening liquid composition may include other solvents. It is preferable that the other organic solvent is an organic solvent having water solubility. One of the functions of the organic solvent is to improve the wettability of the softening liquid composition with respect to a fabric or to enhance the moisture retention properties of the softening liquid composition. In addition, the organic solvent can also function as a penetrant.

Examples of the organic solvent include esters, alkylene glycol ethers, cyclic esters, nitrogen-containing solvents, and polyhydric alcohols. Examples of the nitrogen-containing solvents include cyclic amides and acyclic amides. Examples of the acyclic amides include alkoxyalkylamides.

Examples of the esters include glycol monoacetates such as ethylene glycol monomethyl ether acetate, ethylene glycol monoethyl ether acetate, and ethylene glycol monobutyl ether acetate, and glycol diesters such as ethylene glycol diacetate, diethylene glycol diacetate, and propylene glycol diacetate.

The alkylene glycol ethers may be alkylene glycol monoethers or diethers, and alkyl ethers are preferable. Specific examples thereof include alkylene glycol monoalkyl ethers such as ethylene glycol monomethyl ether, ethylene glycol monoethyl ether, ethylene glycol monoisopropyl ether, ethylene glycol monobutyl ether, and diethylene glycol monomethyl ether, and alkylene glycol dialkyl ethers such as ethylene glycol dimethyl ether, ethylene glycol diethyl ether, ethylene glycol dibutyl ether, diethylene glycol dimethyl ether, and diethylene glycol diethyl ether.

Examples of the cyclic esters include cyclic esters (lactones) such as $\beta$-propiolactone, $\gamma$-butyrolactone, $\delta$-valerolactone, $\epsilon$-caprolactone, and $\beta$-butyrolactone, and compounds in which a hydrogen of a methylene group adjacent to a carbonyl group thereof is substituted with an alkyl group having 1 to 4 carbon atoms.

Examples of the alkoxyalkylamides include 3-methoxy-N,N-dimethylpropionamide, 3-methoxy-N,N-diethylpropionamide, 3-methoxy-N,N-methylethylpropionamide, 3-ethoxy-N,N-dimethylpropionamide, 3-ethoxy-N,N-diethylpropionamide, 3-ethoxy-N,N-methylethylpropionamide, 3-n-butoxy-N,N-dimethylpropionamide, 3-n-butoxy-N,N-diethylpropionamide, and 3-n-butoxy-N,N-methylethylpropionamide.

Examples of the cyclic amides include lactams, and examples thereof include pyrrolidones such as 2-pyrrolidone, 1-methyl-2-pyrrolidone, 1-ethyl-2-pyrrolidone, 1-propyl-2-pyrrolidone, and 1-butyl-2-pyrrolidone.

In addition, it is also preferable to use compounds represented by Formula (1) as the alkoxyalkylamides.

$$R^1\text{-O-}CH_2CH_2\text{-(C=O)-}NR^2R^3 \,... \qquad (1)$$

In Formula (1), $R^1$ represents an alkyl group having 1 or more and 4 or less carbon atoms, and $R^2$ and $R^3$ each independently represent a methyl group or an ethyl group. The "alkyl group having 1 or more and 4 or less carbon atoms" may be a linear or branched alkyl group, and examples thereof include a methyl group, an ethyl group, an n-propyl group, an isopropyl group, an n-butyl group, a sec-butyl group, an iso-butyl group, and a tert-butyl group. The compounds represented by Formula (1) may be used alone or as a mixture of two or more thereof.

Examples of the polyhydric alcohols include 1,2-alkanediol (for example, alkanediols such as ethylene glycol, propylene glycol (alias: propane-1,2-diol), 1,2-butanediol, 1,2-pentanediol, 1,2-hexanediol, 1,2-heptanediol, and 1,2-octanediol), and polyhydric alcohols (polyols) excluding the 1,2-alkanediol (for example, diethylene glycol, dipropylene glycol, 1,3-propanediol, 1,3-butanediol (alias: 1,3-butylene glycol), 1,4-butanediol, 1,5-pentanediol, 1,6-hexanediol, 2-ethyl-2-methyl-1,3-propanediol, 2-methyl-2-propyl-1,3-propanediol, 2-methyl-1,3-propanediol, 2,2-dimethyl-1,3-propanediol, 3-methyl-1,3-butanediol, 2-ethyl-1,3-hexanediol, 3-methyl-1,5-pentanediol, 2-methylpentane-2,4-diol, trimethylol propane, and glycerin).

The polyhydric alcohols can be divided into alkanediols and polyols. The alkanediols are diols of an alkane having 5 or more carbon atoms. The number of carbon atoms of the alkane is preferably 5 to 15, more preferably 6 to 10, and even more preferably 6 to 8. 1,2-alkanediol is preferable.

The polyols are polyols of alkane having 4 or less carbon atoms or intermolecular condensates of hydroxyl groups of polyols of alkane having 4 or less carbon atoms. The number of carbon atoms of the alkane is preferably 2 to 3. The number of the hydroxyl groups in the molecule of the polyols is 2 or more, preferably 5 or less, and more preferably 3 or less. When the polyols are the intermolecular condensates described above, the number of intermolecular condensates is 2 or more, preferably 4 or less, and more preferably 3 or less. The polyhydric alcohols may be used alone or as a mixture of two or more thereof.

The alkanediols and polyols can mainly function as a penetrating solvent and/or a moisturizing solvent. However, the alkanediols tend to have strong properties as the penetrating solvent, and polyols tend to have strong properties as the moisturizing solvent.

Additive

The softening liquid composition may include an additive. Examples of the additive include a pH adjuster, saccharides, a chelating agent, a preservatives and a fungicide, a rust inhibitor, and others.

The pH adjuster is not particularly limited, and examples thereof include an appropriate combination of acids, bases, weak acids, and weak bases. Examples of acids and bases used in such a combination include inorganic acids such as sulfuric acid, hydrochloric acid, and nitric acid, inorganic bases such as lithium hydroxide, sodium hydroxide, potassium hydroxide, dihydrogen potassium phosphate, hydrogen disodium phosphate, potassium carbonate, sodium carbonate, hydrogen sodium carbonate, and ammonia, organic bases such as triethanol amine, diethanol amine, monoethanol amine, tripropanol amine, triisopropanol amine, diisopropanol amine, and tris(hydroxymethyl)aminomethane (THAM), and organic acids such as adipic acid, citric acid, succinic acid, lactic acid, Good's buffers such as N,N-bis(2-hydroxyethyl)-2-aminoethanesulfonic acid (BES), 4-(2-hydroxyethyl)-1-piperazineethanesulfonic acid (HEPES), morpholinoethanesulfonic acid (MES), carbamoylmethyl iminobisacetic acid (ADA), piperazine-1,4-bis(2-ethanesulfonic acid) (PIPES), N-(2-acetamide)-2-aminoethanesulfonic acid (ACES), cholamine chloride, N-tris(hydroxymethyl)methyl-2-aminoethanesulfonic acid (TES), acetamide glycine, tricine, glycine amide, and bicine, a phosphate buffer solution, a citrate buffer solution, and a tris buffer solution. Further, among these, a tertiary amine such as triethanolamine or triisopropanolamine and a carboxy group-containing organic acid such as adipic acid, citric acid, succinic acid, or lactic acid are preferably contained as a part or the whole of the pH adjuster since the pH buffering effect can be more stably obtained.

Specific examples of saccharides include glucose, mannose, fructose, ribose, xylose, arabinose, galactose, aldonic acid, glucitol (sorbitol), maltose, cellobiose, lactose, sucrose, trehalose, and maltotriose.

Examples of the chelating agent include ethylenediaminetetraacetic acid and salts thereof (such as ethylenediaminetetraacetic acid dihydrogen disodium salt, ethylene diamine nitrilotriacetate, hexametaphosphate, pyrophosphate, and metaphosphate).

Examples of the preservative and the fungicide include sodium benzoate, sodium pentachlorophenolate, sodium 2-pyridinethiol-1-oxide, sodium sorbate, sodium dehydroacetate, PROXEL CRL, PROXEL BDN, PROXEL GXL, PROXEL XL-2, PROXEL IB, and PROXEL TN (trade names, all manufactured by LONZA KK.), and 4-chloro-3-methylphenol (such as PREVENTOL CMK manufactured by Bayer AG).

Examples of the rust inhibitor include benzotriazole, acidic sulfite, sodium thiosulfate, ammonium thioglycolic acid, diisopropylammonium nitrite, pentaerythritol tetranitrate, and dicyclohexylammonium nitrite. Among these, benzotriazole is particularly suitable.

Examples of other additives include a viscosity modifier, an antifungal agent, an antioxidant, an oxygen absorber, and a dissolution aid.

In the softening liquid composition, the content of the coloring material is preferably 0.1% by mass or less with respect to the total amount of the softening liquid composition. That is, it is preferable that the softening liquid composition is not used with the intention of coloring.

1.2.1. 4 Manufacturing and Physical Properties

When the softening liquid composition is attached to a recording medium such as fabric or the like by an ink jet method, the viscosity of the composition at 20°C is preferably 1.5 mPa·s or more and 15 mPa·s or less, more preferably 1.5 mPa·s or more and 7 mPa·s or less, and even more preferably 1.5 mPa·s or more and 5.5 mPa·s or less.

The surface tension of the softening liquid composition at 25°C is 40 mN/m or less, preferably 38 mN/m or less, more preferably 35 mN/m or less, and even more preferably 30 mN/m or less from the viewpoint of ensuring appropriate wet spreadability to the recording medium. In addition, the surface tension is preferably 20 mN/m or more, and more preferably 25 mN/m or more.

The surface tension can be measured by confirming the surface tension when a platinum plate is wetted with the composition in an environment of 25°C using an automatic surface tensiometer CBVP-Z (manufactured by Kyowa Interface Science, Co., Ltd.).

The softening liquid composition is obtained by mixing the components described above in an arbitrary order and, as necessary, carrying out filtration or the like to remove impurities. As a method of mixing each component, a method of sequentially adding materials to a container equipped with a stirring device such as a mechanical stirrer and a magnetic stirrer, and performing stirring and mixing is suitably used. As a filtration method, centrifugal filtration, filter filtration, and the like can be performed as necessary.

In addition, it is more preferable that the shear hardness of the softening liquid composition is smaller than the shear hardness of the coating liquid composition described later. In this manner, the color developability, bleeding, yellowing, and abrasion resistance (dry) of the recorded matter can be improved.

1.2.2. Attachment Form

The softening liquid attachment step is performed by an ink jet method or a spray method. As a method of attaching the softening liquid to the recording medium, any of an ink jet method and a method of applying the softening liquid to the recording medium using various sprays, or a combination of these methods can be used.

Either of the softening liquid attachment step and the coating liquid attachment step described later may be performed first on a predetermined region of the recording medium, and the softening liquid attachment step and the coating liquid attachment step may be performed at the same time. For example, when the softening liquid attachment step is performed by an inkjet method, the softening liquid attachment step may be performed by the same scanning as in the coating liquid attachment step, or the coating liquid attachment step may be performed by a main scanning different from the main scanning of the softening liquid attachment step. In addition, when the softening liquid attachment step is performed by the same scanning as the coating liquid attachment step, either the softening liquid composition or the coating liquid composition may first land on the recording medium.

As a form in which the softening liquid attachment step and the coating liquid attachment step described later are performed at the same time, the coating liquid composition may be attached to the same scanning region of the recording medium by the same scanning as the scanning (pass) in which the softening liquid composition is attached to the recording medium.

The softening liquid attachment step is preferably performed by an ink jet method. In such a case, the viscosity at 20°C is preferably 1.5 mPa·s or more and 15 mPa·s or less, more preferably 1.5 mPa·s or more and 7 mPa·s or less, and even more preferably 1.5 mPa·s or more and 5.5 mPa·s or less. When the softening liquid is attached to the recording medium by an ink jet method, it is easy to efficiently form a predetermined softening liquid attachment region in the recording medium.

The attachment amount of the softening liquid composition in the softening liquid attachment step is preferably 5 g/m² or more and 100 g/m² or less, more preferably 15 g/m² or more and 80 g/m² or less, and even more preferably 15 g/m² or more and 50 g/m² or less. In this manner, the bleeding of the softening liquid can be further suppressed. In addition, since the softening liquid can be applied at the minimum required amount, the original water absorptivity and texture of the recording medium can be appropriately maintained. Further, a colored image having more favorable color developability can be obtained.

The attachment amount of the softening liquid composition described above is applied in the recording region where the softening liquid and the coating liquid composition are overlapped and attached in the recording method of the present embodiment. In addition, the maximum attachment amount of the softening liquid composition in the region may be within the above range, which is preferable.

### 1.3. Coating Liquid Attachment Step

In the coating liquid attachment step, a coating liquid composition containing anionic resin particles and water is attached to the recording medium.

### 1.3.1. Coating Liquid Composition

The coating liquid composition contains anionic resin particles and water, and the content of the anionic resin particles is 80% by mass or more with respect to the total amount of the non-volatile components in the coating liquid composition.

### 1.3.1. 1 Anionic Resin Particle

The coating liquid composition contains anionic resin particles. The resin particles can further improve the adhesion of an image or the like due to the composition attached to the fabric. As the anionic resin particles, for example, there may be mentioned resin particles having anionic properties among resin particles formed of a urethane-based resin, an acrylic resins (including styrene-acrylic resin), a fluorene-based resin, a polyolefin-based resin, a rosin-modified resin, a terpene-based resin, a polyester-based resin, a polyamide-based resin, an epoxy-based resin, a vinyl chloride-based resin, a vinyl chloride-vinyl acetate copolymer, an ethylene vinyl acetate-based resin, a silicone-acrylic resin, and the like. Among these, a urethane-based resin, a silicone-acrylic resin, an acrylic resin, a polyolefin-based resin, and a polyester-based resin are preferable. These resin particles are often handled in the form of an emulsion, but may be in the form of powder. In addition, the resin particles can be used alone or in combination of two or more thereof.

Urethane-based resin is a generic term for resins having a urethane bond. For the urethane-based resin, a polyether-type urethane resin including an ether bond in the main chain, a polyester-type urethane resin including an ester bond in the main chain, a polycarbonate-type urethane resin including a carbonate bond in the main chain, and the like, in addition to a urethane bond, may be used. In addition, as the urethane-based resin, a commercially available product may be used, and for example, commercially available products such as SUPERFLEX 460, 460s, 840, and E-4000 (trade names, manufactured by DKS Co., Ltd.), RESAMINE D-1060, D-2020, D-4080, D-4200, D-6300, and D-6455 (trade names, manufactured by Dainichiseika Color & Chemicals Mfg. Co., Ltd.), Takelac WS-6021, and W-512-A-6 (trade names, manufactured by Mitsui Chemicals & SKC Polyurethanes Inc.), Sancure 2710 (trade name, manufactured by Lubrizol Corporation), PERMARIN UA-150 (trade name, manufactured by Sanyo Chemical Industries Ltd.), ETERNACOLL UW series, for example, UW-1527 or the like, (manufactured by UBE Corporation), and the like may be used.

Acrylic resin is a generic term for polymers obtained by polymerizing at least acrylic monomers such as (meth)acrylic acid and (meth)acrylic acid ester as one component, and examples thereof include a resin obtained from an acrylic monomer and a copolymer of an acrylic monomer and other monomers. Examples thereof include an acrylic-vinyl-based resin which is a copolymer of an acrylic monomer and a vinyl-based monomer, and the like. In addition, examples of the vinyl-based monomer include styrene and the like.

As the acrylic monomer, acrylamide, acrylonitrile, and the like can also be used. For the resin emulsion using acrylic resin as a raw material, a commercially available product may be used, and for example, any resin emulsion may be selected and used from FK-854 (trade name, manufactured by CHIRIKA Co., Ltd.), Mowinyl 952B, 718A, and 6760 (trade names, manufactured by Japan Coating Resin Corporation), Nipol LX852 and LX874 (trade names, manufactured by Zeon Corporation), and the like.

Incidentally, in the present specification, the acrylic resin may be a styrene-acrylic resin described below. In addition, in the present specification, the notation of "(meth)acrylic" means at least one of acrylic and methacrylic.

The styrene-acrylic resin is a copolymer obtained from a styrene monomer and a (meth)acrylic monomer, and examples thereof include styrene-acrylic acid copolymers, styrene-methacrylic acid copolymers, styrene-methacrylic acid-acrylate copolymers, styrene-α-methylstyrene-acrylic acid copolymers, and styrene-α-methylstyrene-acrylic acid-acrylate copolymers. As the styrene-acrylic resin, a commercially available product may be used, and for example, Joncryl 62J, 7100, 390, 711, 511, 7001, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (trade names, manufactured by BASF SE), Mowinyl 966A and 975N (trade names, manufactured by Japan Coating Resin Corporation), VINYBLAN 2586 (manufactured by Nissin Chemical Industry Co., Ltd.), and the like may be used.

As the silicone-acrylic copolymer resin, a commercially available product can be used. Examples thereof include CHALINE series FE-230N, FE-502, E-370, RU-911, R-170, R170S, LC-190, and R-170BX, manufactured by Nissin Chemical Industry Co., Ltd., SYMAC US-380, SYMAC US-450, and SYMAC US-480, manufactured by Toagosei Co., Ltd., IE-7170, SE 1980 CLEAR, BY22-826EX, and POLON-MF-40, manufactured by Dow Corning Toray Silicone Co., Ltd., LEXAN EXL manufactured by SABIC, TARFLON NEO manufactured by Idemitsu Kosan Co., Ltd., Banstar S-806 manufactured by Saiden Chemical Industry Co., Ltd., Mowinyl manufactured by Japan Coating Resin Corporation, COATAX manufactured by Toray Fine Chemicals Co., Ltd., DAITOSOL 5000SJ manufactured by Daito Kasei Kogyo Co., Ltd., YODOSOL GH41 manufactured by N.S.C. Japan, an acrylates/ethylhexyl acrylate/dimethicone methacrylate copolymer (trade name: KP578) manufactured by Shin-Etsu Chemical Co., Ltd., BONCOAT and CERANATE manufactured by DIC Corporation, and acrylic silicone-based emulsions "SIFCLEAR S101" and "SIFCLEAR S102" manufactured by JSR Corporation.

The polyolefin-based resin has an olefin such as ethylene, propylene, or butylene in the structural skeleton, and known ones can be appropriately selected and used. As the olefin resin, a commercially available product can be used, for example, ARROWBASE CB-1200, CD-1200 (trade name, manufactured by Unitika Ltd.), and the like may be used.

In addition, the resin particles may be supplied in the form of an emulsion, and as examples of commercially available products of such a resin emulsion include Microgel E-1002 and E-5002 (trade names, manufactured by Nippon Paint Co. Ltd., styrene-acrylic resin emulsion), VONCOAT 4001 (trade name, manufactured by DIC Corporation, acrylic resin emulsion), VONCOAT 5454 (trade name, manufactured by DIC Corporation, styrene-acrylic resin emulsion), Polysol AM-710, AM-920, AM-2300, AP-4735, AT-860, and PSASE-4210E (acrylic resin emulsion), Polysol AP-7020 (styrene-acrylic resin emulsion), Polysol SH-502 (vinyl acetate resin emulsion), Polysol AD-13, AD-2, AD-10, AD-96, AD-17, and AD-70 (ethylene vinyl acetate resin emulsion), Polysol PSASE-6010 (ethylene vinyl acetate resin emulsion) (trade names, manufactured by Showa Denko KK), Polysol SAE1014 (trade name, styrene-acrylic resin emulsion, manufactured by Zeon Corporation), Saivinol SK-200 (trade name, acrylic resin emulsion, manufactured by Saiden Chemical Industry Co., Ltd.), AE-120A (trade name, manufactured by JSR Corporation, acrylic resin emulsion), AE373D (trade name, manufactured by Emulsion Technology Co., Ltd., carboxy-modified styrene-acrylic resin emulsion), Seikadyne 1900W (trade name, manufactured by Dainichiseika Color & Chemicals Mfg. Co., Ltd., ethylene vinyl acetate resin emulsion), VINYBLAN 2682 (acrylic resin emulsion), VINYBLAN 2886 (vinyl acetate acrylic resin emulsion), VINYBLAN 5202 (acetic acid acrylic resin emulsion) (trade names, manufactured by Nisshin Chemical Industry Co., Ltd.), Elitel KA-5071S, KT-8803, KT-9204, KT-8701, KT-8904, and KT-0507 (trade names, manufactured by Unitika Ltd., polyester resin emulsion), Hi-Tech SN-2002 (trade name, manufactured by TOHO CHEMICAL INDUSTRY Co., Ltd., polyester resin emulsion), TAKELAK W-6020, W-635, W-6061, W-605, W-635, W-6021, and WS-5100 (trade names, manufactured by Mitsui Chemicals & SKC Polyurethanes Inc., urethane-based resin emulsion), SUPERFLEX 870, 800, 150, 420, 460, 470, 610, and 700 (trade names, manufactured by DKS Co., Ltd., urethane-based resin emulsion), PERMARIN UA-150 (manufactured by Sanyo Chemical Industries, Ltd., urethane-based resin emulsion), Sancure 2710 (manufactured by Japanese Lubrizol Corporation, urethane-based resin emulsion), NeoRez R-9660, R-9637, and R-940 (manufactured by Kusumoto Chemicals, Ltd., urethane-based resin emulsion), ADEKA BONTIGHTER HUX-380 and 290K (manufactured by ADEKA Corporation, urethane-based resin emulsion), Mowinyl 966A and Mowinyl 7320 (manufactured by Japan Coating Resin Corporation), Joncryl 7100, 390, 711, 511, 7001, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (manufactured by BASF SE), NK binder R-5HN (manufactured by Shin-Nakamura Chemical Co., Ltd.), HYDRAN WLS-210 (non-crosslinkable polyurethane: manufactured by DIC Corporation), and Joncryl 7610 (manufactured by BASF SE). Any of these may be selected and used.

The content of the resin particles in the coating liquid composition is 80% by mass or more with respect to the total amount of the non-volatile components. The content of the resin particles in the coating liquid composition is more preferably 83% by mass or more, and even more preferably 90% by mass or more with respect to the total amount of the non-volatile components.

1.3.1. 2 Water

The coating liquid composition includes water. Regarding water, the content thereof is the same as that of the softening liquid composition described above, and thus the description thereof will be omitted.

1.3.1. 3 Other Components

The coating liquid composition may contain a water-soluble resin, a moisturizing agent, other solvents, an additive, a surfactant, and the like, in addition to the anionic resin particles and water. The water-soluble resin, the moisturizing agent, other solvents, and the additive are the same as in the above-described softening agent composition, and the description thereof will be omitted.

Surfactant

The coating liquid composition may contain a surfactant. The surfactant has a function of adjusting the surface tension of the composition and adjusting, for example, the wettability with the fabric. Among the surfactants, for example, an acetylene glycol-based surfactant, a silicone-based surfactant, and a fluorine-based surfactant can be preferably used.
The acetylene glycol-based surfactant is not particularly limited, and examples thereof include SURFYNOL 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, and DF110D (all trade names, manufactured by Air Products & Chemicals. Inc.), OLFINE B, Y, P, A, STG, SPC, E1004, E1010, PD-001, PD-002W, PD-003, PD-004, EXP. 4001, EXP. 4036, EXP. 4051, AF-103, AF-104, AK-02, SK-14, and AE-3 (all trade names, manufactured by Nissin Chemical Industry Co., Ltd.), and ACETYLENOL E00, E00P, E40, and E100 (all trade names, manufactured by Kawaken Fine Chemicals Co., Ltd.).
The silicone-based surfactant is not particularly limited, and examples thereof preferably include a polysiloxane-based compound. The polysiloxane-based compound is not particularly limited, and examples thereof include a polyether-modified organosiloxane. Examples of commercially available products of the polyether-modified organosiloxane include BYK-306, BYK-307, BYK-333, BYK-341, BYK-345, BYK-346, and BYK-348 (all trade names, manufactured by BYK Japan KK.), KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (all trade names, manufactured by Shin-Etsu Chemical Co., Ltd.), and SILFACE SAG002, 005, 503A, 008 (all trade names, manufactured by Nissin Chemical Industry Co., Ltd.).
As the fluorine-based surfactant, a fluorine-modified polymer is preferably used, and specific examples thereof include BYK-3440 (manufactured by BYK Japan KK.), SURFLON S-241, S-242, and S-243 (all trade names, manufactured by AGC SEIMI CHEMICAL CO., LTD.), and FTERGENT 215M (manufactured by NEOS COMPANY LIMITED).
When the coating liquid composition contains a surfactant, a plurality of types of surfactants may be contained. When the coating liquid composition contains a surfactant, the content thereof can be set to 0.1% by mass or more and 2% by mass or less, preferably 0.3% by mass or more and 1.5% by mass or less, and more preferably 0.4% by mass or more and 1.0% by mass or less with respect to the total mass of the coating liquid composition.
In the coating liquid composition, the content of the coloring material is preferably 0.1% by mass or less with respect to the total amount of the coating liquid composition. That is, it is preferable that the coating liquid composition is not used with the intention of coloring.

1.3.1. 4 Manufacturing and Physical Properties

When the coating liquid composition is attached to the recording medium such as a fabric by an ink jet method, the viscosity of the composition at 20°C is preferably 1.5 mPa·s or more and 15 mPa·s or less, more preferably 1.5 mPa·s or more and 7 mPa·s or less, and even more preferably 1.5 mPa·s or more and 5.5 mPa·s or less.
The surface tension of the coating liquid composition at 25°C is 40 mN/m or less, preferably 38 mN/m or less, more preferably 35 mN/m or less, and even more preferably 30 mN/m or less from the viewpoint of ensuring appropriate wet spreadability to the recording medium. In addition, the surface tension is preferably 20 mN/m or more, and more preferably 25 mN/m or more.
The coating liquid composition is obtained by mixing the components described above in an arbitrary order and, as necessary, carrying out filtration or the like to remove impurities. As a method of mixing each component, a method of sequentially adding materials to a container equipped with a stirring device such as a mechanical stirrer and a magnetic stirrer, and performing stirring and mixing is suitably used. As a filtration method, centrifugal filtration, filter filtration, and the like can be performed as necessary.
In addition, it is more preferable that the shear hardness of the coating liquid composition is larger than the shear hardness of the above-described softening liquid composition. In this manner, the abrasion resistance (dry) of the recorded matter can be improved.

1.3.2. Attachment Form

The coating liquid attachment step is performed by an ink jet method. Either of the coating liquid attachment step and the softening liquid attachment step may be performed first on a predetermined region of the recording medium, or the coating liquid attachment step and the softening liquid attachment step may be performed at the same time. For example, when the softening liquid attachment step is performed by an inkjet method, the softening liquid attachment step may be performed by the same scanning as in the coating liquid attachment step, or the coating liquid attachment step may be performed by a main scanning different from the main scanning of the softening liquid attachment step. In addition, when the softening liquid attachment step is performed by the same scanning as the coating liquid attachment step, either the softening liquid composition or the coating liquid composition may first land on the recording medium.

The attachment amount of the coating liquid composition in the coating liquid attachment step is preferably 15 g/m$^2$ or more and 80 g/m$^2$ or less, more preferably 30 g/m$^2$ or more and 60 g/m$^2$ or less, and even more preferably 30 g/m$^2$ or more and 50 g/m$^2$ or less. In this manner, the bleeding of the coating liquid can be further suppressed. In addition, since the softening liquid can be applied at the minimum required amount, the original water absorptivity and texture of the recording medium can be appropriately maintained. Further, a colored image having more favorable color developability can be obtained.

In addition, in the attachment region of the recording medium, the ratio of the attachment amount of the softening liquid to the attachment amount of the coating liquid composition is more preferably 0.25 or more and 1 or less. In this manner, the bleeding of the softening liquid can be further reduced.

In addition, when the cationic properties are improved by using a metal salt in the reaction liquid composition described later, the anionic properties are improved by using an anionic resin in the ink composition described later, and the cationic silicone is used in the softening liquid composition to improve the cationic properties, the mutual aggregation reaction is promoted and thus a configuration which is less likely to cause bleeding can be formed.

Further, it is also preferable that an area of the recording medium to which the coating liquid composition is applied in the coating liquid attachment step is larger than an area of the recording medium to which the softening liquid composition is applied in the above-described softening liquid attachment step. In this manner, since the application region of the coating liquid is wider than the application region of the softening liquid, the bleeding of the softening liquid can be further suppressed.

1.4. Other Steps

The recording method of the present embodiment may further include an ink attachment step of attaching an ink composition containing a pigment and water to the recording medium by an ink jet method, and a reaction liquid attachment step of attaching a reaction liquid composition containing an aggregating agent that aggregates components of the ink composition, and water to the recording medium by an ink jet method. The recording method according to the present embodiment may include a drying step.

1.4.1. Ink Attachment Step

The recording method of the present embodiment may include an ink attachment step of attaching an ink composition containing a pigment and water to a recording medium by an inkjet method.

1.4.1. 1 Ink Composition

The ink composition contains at least a pigment and water. The ink composition is a so-called pigment color ink which contains a pigment. Examples of the pigment contained in the composition include color pigments such as cyan, yellow, magenta, and black, and special color pigments such as white and pearl.

The pigment may be a mixture. The pigment is excellent in storage stability such as light resistance, weather resistance, and gas resistance, and is preferably an organic pigment from that viewpoint.

Specifically, as the pigment, azo pigments such as insoluble azo pigments, condensed azo pigments, azo lakes, and chelated azo pigments, polycyclic pigments such as phthalocyanine pigments, perylene and perinone pigments, anthraquinone pigments, quinacridone pigments, dioxane pigments, thioindigo pigments, isoindolinone pigments, and quinophthalone pigments, dye chelates, dye lakes, nitro pigments, nitroso pigments, aniline black, daylight fluorescent pigments, carbon black, and the like can be used. These pigments may be used alone or in combination of two or more thereof. Further, a white pigment, a photoluminescent pigment, or the like may be used as the pigment.

Specific examples of the pigments are not particularly limited, but examples thereof include the following.

Examples of black pigments include No. 2300, No. 900, MCF 88, No. 33, No. 40, No. 45, No. 52, MA7, MA8, MA100, and No. 2200 B (all manufactured by Mitsubishi Chemical Corporation), Raven 5750, Raven 5250, Raven 5000, Raven 3500, Raven 1255, and Raven 700 (all manufactured by Columbia Carbon Inc.), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (manufactured by CABOT JAPAN K.K.), Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all manufactured by Degussa).

Examples of yellow pigments include C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, and 180.

Examples of magenta pigments include C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, 245, or C.I. Pigment Violet 19, 23, 32, 33, 36, 38, 43, and 50.

Examples of cyan pigments include C.I. Pigment Blue 1, 2, 3, 15, 15: 1, 15: 2, 15: 3, 15: 34, 15: 4, 16, 18, 22, 25, 60, 65, and 66, and C.I. Bat blue 4 and 60.

In addition, pigments other than the magenta, cyan, and yellow pigments are not particularly limited and examples thereof include C.I. Pigment Green 7, 10, C.I. Pigment Brown 3, 5, 25, 26, and C.I. Pigment Orange 1, 2, 5, 7, 13, 14, 15, 16, 24, 34, 36, 38, 40, 43, and 63.

The pearl pigment is not particularly limited and examples thereof include pigments having pearl luster or interference luster such as titanium dioxide coated mica, fish scale foil, and bismuth acid chloride.

The metallic pigment is not particularly limited and examples thereof include particles formed of aluminum, silver, gold, platinum, nickel, chromium, tin, zinc, indium, titanium, copper, and the like, alone or in alloys.

Examples of the white pigment include metal compounds such as metal oxide, barium sulfate, and calcium carbonate. Examples of the metal oxide include titanium dioxide, zinc oxide, silica, alumina, magnesium oxide, and the like. In addition, particles having a hollow structure may be used as the white pigment, and as the particles having a hollow structure, known particles can be used.

Suitably, the pigment can be stably dispersed in a dispersion medium, and for this purpose, a dispersant may be used to disperse the pigment. As the dispersant, there is provided a resin dispersant and the like, and the dispersant is selected from those that can improve dispersion stability of the pigment in the ink composition. In addition, the pigment may also be used as a self-dispersing pigment by modifying the surface of the pigment particles by oxidizing or sulfonating the pigment surface with, for example, ozone, hypochlorous acid, fuming sulfuric acid, or the like.

Examples of the resin dispersant (dispersant resin) include (meth)acrylic resins such as poly(meth)acrylic acid, (meth)acrylic acid-acrylonitrile copolymers, (meth)acrylic acid-(meth)acrylic acid ester copolymers, vinyl acetate-(meth)acrylic acid ester copolymers, vinyl acetate-(meth)acrylic acid copolymers, and vinyl naphthalene-(meth)acrylic acid copolymers, and salts thereof; styrene-based resins such as styrene-(meth)acrylic acid copolymers, styrene-(meth)acrylic acid-(meth)acrylic acid ester copolymers, styrene-$\alpha$-methylstyrene-(meth)acrylic acid copolymers, styrene-$\alpha$-methylstyrene-(meth)acrylic acid-(meth)acrylic acid ester copolymers, styrene-maleic acid copolymers, and styrene-maleic acid anhydride copolymers, and salts thereof; urethane-based resins, which are polymer compounds (resins) having a urethane bond formed when an isocyanate group reacts with a hydroxyl group, and which may be linear and/or branched regardless of a crosslinked structure, and salts thereof; polyvinyl alcohols; vinyl naphthalene-maleic acid copolymers and salts thereof; vinyl acetate-maleic acid ester copolymers and salts thereof; and water-soluble resins such as vinyl acetate-crotonic acid copolymers and salts thereof. Among these, a copolymer of a monomer having a hydrophobic functional group and a monomer having a hydrophilic functional group, and a polymer formed of monomers having both a hydrophobic functional group and a hydrophilic functional group are preferable. As the form of the copolymer, any form of a random copolymer, a block copolymer, an alternating copolymer, and a graft copolymer can be used.

Examples of commercially available products of the styrene-based resin dispersant include X-200, X-1, X-205, X-220, and X-228 (manufactured by SEIKO PMC CORPORATION), NOPCOSPERSE (registered trademark) 6100 and 6110 (manufactured by SAN NOPCO LIMITED), Joncryl 67, 586, 611, 678, 680, 682, and 819 (manufactured by BASF SE), DISPER BYK-190 (manufactured by BYK Japan KK.), and N-EA137, N-EA157, N-EA167, N-EA177, N-EA197D, N-EA207D, and E-EN10 (manufactured by DKS Co., Ltd.).

In addition, examples of commercially available products of the acrylic resin dispersants include BYK-187, BYK-190, BYK-191, BYK-194N, and BYK-199 (manufactured by BYK Japan KK.), and Aron A-210, A6114, AS-1100, AS-1800, A-30SL, A-7250, and CL-2 (manufactured by TOAGOSEI CO., LTD.).

Further, examples of commercially available products of the urethane-based resin dispersant include BYK-182, BYK-183, BYK-184, and BYK-185 (manufactured by BYK Japan KK.), TEGO Dispers 710 (manufactured by Evonik Tego Chemi GmbH), and Borchi (registered trademark) Gen 1350 (manufactured by OMG Borchers GmbH).

These dispersants may be used alone or in combination of two or more thereof. The total content of the dispersant is preferably 0.1 parts by mass or more and 30 parts by mass or less, more preferably 0.5 parts by mass or more and 25 parts by mass or less, even more preferably 1 part by mass or more and 20 parts by mass or less, and still even more preferably 1.5 parts by mass or more and 15 parts by mass or less with respect to 50 parts by mass of the pigment. When the content of the dispersant is 0.1 parts by mass or more with respect to 50 parts by mass of the pigment, the dispersion stability of the pigment can be further enhanced. In addition, when the content of the dispersant is 30 parts by mass or less with respect to 50 parts by mass of the pigment, the viscosity of the obtained dispersion can be suppressed to be small.

By using such a resin dispersant as the dispersant, the dispersion and aggregation properties of the pigment are further improved, and an image having more favorable dispersion stability and more favorable image quality can be obtained.

The dispersant resin preferably has an acid value, and the acid value is preferably 5 mg KOH/g or more, more preferably 10 to 200 mg KOH/g, and even more preferably 15 to 150 mg KOH/g. Further, an acid value of 20 to 100 mg KOH/g is preferable, and an acid value of 25 to 70 mg KOH/g is more preferable.

The acid value can be measured by the neutralization titration method in accordance with JIS K 0070. As a titration device, for example, "AT610" manufactured by Kyoto Electronics Manufacturing Co., Ltd. can be used.

The content of the pigment is preferably 0.3% by mass or more and 20% by mass or less, and more preferably 0.5% by mass or more and 15% by mass or less with respect to the total mass of the ink composition. Further, the content is preferably 1% by mass or more and 10% by mass or less, and more preferably 2% by mass or more and 7% by mass or less.

The ink composition may contain resin particles, a moisturizing agent, a solvent, a surfactant, an additive, and the like, in addition to the pigment and water. Since these materials are the same as those already described, the description thereof will be omitted.

1.4.1. 2 Manufacturing and Physical Properties

When the ink composition is attached to the recording medium such as a fabric by an ink jet method, the viscosity of the composition at 20°C is preferably 1.5 mPa·s or more and 15 mPa·s or less, more preferably 1.5 mPa·s or more and 7 mPa·s or less, and even more preferably 1.5 mPa·s or more and 5.5 mPa·s or less.

The surface tension of the ink composition at 25°C is 40 mN/m or less, preferably 38 mN/m or less, more preferably 35 mN/m or less, and even more preferably 30 mN/m or less from the viewpoint of ensuring appropriate wet spreadability to the recording medium. In addition, the surface tension is preferably 20 mN/m or more, and more preferably 25 mN/m or more.

The ink composition is obtained by mixing the components described above in an arbitrary order and, as necessary, carrying out filtration or the like to remove impurities. As a method of mixing each component, a method of sequentially adding materials to a container equipped with a stirring device such as a mechanical stirrer and a magnetic stirrer, and performing stirring and mixing is suitably used. As a filtration method, centrifugal filtration, filter filtration, and the like can be performed as necessary.

1.4.1. 3 Attachment Form

The ink attachment step is performed by an ink jet method. Any one of the ink attachment step, the coating liquid attachment step, and the softening liquid attachment step may be performed first on a predetermined region of the recording medium and the ink attachment step, the coating liquid attachment step, and the softening liquid attachment step may be performed at the same time.

The attachment amount of the ink composition in the ink attachment step is preferably 15 g/m$^2$ or more and 120 g/m$^2$ or less, more preferably 30 g/m$^2$ or more and 80 g/m$^2$ or less, and even more preferably 30 g/m$^2$ or more and 60 g/m$^2$ or less.

1.4.2. Reaction Liquid Attachment Step

The recording method of the present embodiment may have a reaction liquid attachment step of attaching a reaction liquid composition containing an aggregating agent that aggregates the components of the ink composition and water to a recording medium by an ink jet method.

1.4.2. 1 Reaction Liquid Composition

The reaction liquid contains at least an aggregating agent that aggregates the components of the ink composition and water. The aggregating agent has an effect of aggregating the pigment and the resin particles by reacting with the components such as the pigment included in the ink composition and the resin particles included in the ink composition. For example, due to such aggregation, the color development of the pigment can be enhanced, the fixability of the resin particles can be enhanced, and/or the viscosity of the ink can be increased.

Although the aggregating agent is not particularly limited, examples thereof include a metal salt, an inorganic acid, an organic acid, and a cationic compound, and as the cationic compound, a cationic resin (cationic polymer), a cationic surfactant, and the like can be used. Among these, a polyvalent metal salt is preferable as the metal salt, and a cationic resin is preferable as the cationic compound. Therefore, as the aggregating agent, it is preferable to select any one of a cationic resin, an organic acid, and a polyvalent metal salt from the viewpoint of obtaining particularly excellent image quality, abrasion resistance, gloss, and the like.

The metal salt is preferably a polyvalent metal salt, but metal salts other than polyvalent metal salts can be used. Among these aggregating agents, it is preferable to use at least one selected from a metal salt and an organic acid from the viewpoint of excellent reactivity with components included in the ink. In addition, among the cationic compounds, cationic resins are preferably used from the viewpoint of easy dissolution in the softening liquid. In addition, a plurality of types of aggregating agents can be used in combination.

The polyvalent metal salt is a compound formed of a divalent or higher metal ion and an anion. Examples of the divalent or higher metal ion include ions such as calcium, magnesium, copper, nickel, zinc, barium, aluminum, titanium, strontium, chromium, cobalt, iron, and the like. Among the metal ions constituting these polyvalent metal salts, the metal ion is preferably at least one of calcium ion and magnesium ion from the viewpoint of excellent aggregation properties of the components of the ink.

The anion constituting the polyvalent metal salt is an inorganic ion or an organic ion. That is, the polyvalent metal salt in the present disclosure is formed of an inorganic ion or an organic ion and a polyvalent metal. Examples of the inorganic ion include a chloride ion, a bromine ion, an iodine ion, a nitrate ion, a sulfate ion, and a hydroxide ion. Examples of the organic ion include an organic acid ion, and examples thereof include a carboxylic acid ion.

The polyvalent metal compound is preferably an ionic polyvalent metal salt, and in particular, when the polyvalent metal salt is a magnesium salt or a calcium salt, the stability of the softening liquid is further improved. In addition, as the counter ion of the polyvalent metal, any of an inorganic acid ion and an organic acid ion may be used.

Specific examples of the polyvalent metal salt include a calcium carbonate such as a heavy calcium carbonate and a light calcium carbonate, calcium nitrate, calcium chloride, calcium sulfate, magnesium sulfate, calcium hydroxide, magnesium chloride, magnesium carbonate, barium sulfate, chloride barium, zinc carbonate, zinc sulfide, aluminum silicate, calcium silicate, magnesium silicate, copper nitrate, calcium formate, calcium acetate, magnesium acetate, and aluminum acetate. These polyvalent metal salts may be used alone, or may be used in combination of two or more thereof. Among these, since sufficient solubility in water can be secured and the use thereof reduces traces of the softening liquid (makes traces less visible), at least any one of calcium formate, magnesium sulfate, calcium nitrate, and calcium chloride is preferable, and calcium formate or calcium nitrate is more preferable. In addition, these metal salts may have hydration water in the form of a raw material.

Examples of the metal salt other than the polyvalent metal salt include monovalent metal salts such as sodium salt and potassium salt, and for example, there are mentioned sodium sulfate, and potassium sulfate.

Preferable examples of the organic acid include poly(meth)acrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidonecarboxylic acid, pyrone carboxylic acid, pyrrole carboxylic acid, furancarboxylic acid, pyridine carboxylic acid, coumaric acid, thiophene carboxylic acid, nicotinic acid, derivatives of these compounds, and salts thereof. The organic acid may be used alone or in combination of two or more thereof. Metal salts which are salts of organic acids are included in the metal salts described above.

Examples of the inorganic acid include sulfuric acid, hydrochloric acid, nitric acid, and phosphoric acid. The inorganic acid may be used alone or in combination of two or more thereof.

Examples of the cationic resin (cationic polymer) include a cationic urethane-based resin, a cationic olefin-based resin, a cationic amine-based resin, and a cationic surfactant. The cationic polymer is preferably water-soluble.

Commercially available products can be used as the cationic urethane-based resin, and for example, HYDRAN CP-7010, CP-7020, CP-7030, CP-7040, CP-7050, CP-7060, and CP-7610 (trade names, manufactured by DIC Corporation), SUPERFLEX 600, 610, 620, 630, 640, and 650 (trade name, manufactured by DKS Co., Ltd.), urethane emulsion WBR-2120C and WBR-2122C (trade names, manufactured by Taisei Fine Chemical Co,. Ltd.), and the like can be used.

The cationic olefin resin is a resin having an olefin such as ethylene and propylene in the structural skeleton, and known ones can be appropriately selected and used. In addition, the cationic olefin resin may be in an emulsion state of being dispersed in a solvent containing water, an organic solvent, or the like. As the cationic olefin resin, a commercially available product can be used, and examples thereof include arrow base CB-1200 and CD-1200 (trade name, manufactured by Unitika Ltd.).

As the cationic amine-based resin (cationic polymer), any resin having an amino group in the structure may be used, and known ones can be appropriately selected and used. Examples thereof include polyamine resin, polyamide resin, polyallylamine resin, and the like. Polyamine resin is a resin having an amino group in the main skeleton of the resin. Polyamide resin is a resin having an amide group in the main skeleton of the resin. Polyallylamine resin is a resin having a structure derived from an allyl group in the main skeleton of the resin.

In addition, as the cationic polyamine-based resin, Unisense KHE103L (hexamethylenediamine/epichlorohydrin resin, 1% aqueous solution of a pH of substantially 5.0, viscosity: 20 to 50 (mPa·s), an aqueous solution with a solid content concentration of 50% by mass) manufactured by Senka Co., Ltd., Unisense KHE104L (dimethylamine/epichlorohydrin resin, 1% aqueous solution of a pH of substantially 7.0, viscosity: 1 to 10 (mPa·s), an aqueous solution with a solid content concentration of 20% by mass), and the like can be used. In addition, specific examples of commercially available products of the cationic polyamine-based resin include FL-14 (manufactured by SNF Co. Ltd.), ARAFIX 100, 251S, 255, and 255LOX (manufactured by Arakawa Chemical Industries, Ltd.), DK-6810, 6853, and 6885; and WS-4010, 4011, 4020, 4024, 4027, and 4030 (manufactured by Seiko PMC Corporation), Papiogen P-105 (manufactured by Senka), Sumirez Resin 650 (30), 675A, 6615, and SLX-1 (manufactured by Taoka Chemical Co., Ltd.), Catiomaster (registered trademark) PD-1, 7, 30, A, PDT-2, PE-10, PE-30, DT-EH, EPA-SK01, and TMHMDA-E (manufactured by Yokkaichi Chemical Company, Limited), and Jetfix 36N, 38A, 5052 (manufactured by Satoda Kako Co., Ltd.).

Examples of the polyamine-based resin include a polyallylamine resin. Examples of the polyallylamine resin include polyallylamine hydrochloride, polyallylamineamide sulfate, allylamine hydrochloride/diallylamine hydrochloride copolymers, allylamine acetate/diallylamine acetate copolymers, allylamine acetate/diallylamine acetate copolymers, allylamine hydrochloride/dimethylallylamine hydrochloride copolymers, allylamine/dimethylallylamine copolymers, polydiallylamine hydrochloride, polymethyldiallylamine hydrochloride, polymethyldiallylamineamide sulfate, polymethyldiallylamine acetate, polydiallyldimethylammonium chloride, diallylamine acetate/sulfur dioxide copolymers, diallylmethylethylammonium ethylsulfate/sulfur dioxide copolymers, methyldiallylamine hydrochloride/sulfur dioxide copolymers, diallyldimethylammonium chloride/sulfur dioxide copolymers, and diallyldimethylammonium chloride/acrylamide copolymers.

Examples of the cationic surfactant include primary, secondary, and tertiary amine salt type compounds, alkylamine salts, dialkylamine salts, aliphatic amine salts, benzalconium salts, quaternary ammonium salts, quaternary alkylammonium salt, alkylpyridinium salt, sulfonium salt, phosphonium salt, onium salt, and imidazolinium salt.

A plurality of types of these aggregating agents may be used. In addition, when at least one of a polyvalent metal salt, an organic acid, and a cationic resin is selected among these aggregating agents, the aggregation action is more favorable, and thus an image with higher quality (particularly favorable color developability) can be formed.

Although the total content of the aggregating agent in the reaction liquid composition is not particularly limited, the total content of the aggregating agent in the reaction liquid composition is, for example, 0.1% by mass or more and 15% by mass or less, preferably 1% by mass or more and 10% by mass or less, and more preferably 2% by mass or more and 10% by mass or less with respect to the total mass of the reaction liquid composition.

The reaction liquid composition may contain a moisturizing agent, a solvent, a surfactant, an additive, and the like, in addition to the aggregating agent and water. Since these materials are the same as those already described, the description thereof will be omitted.

In the reaction liquid composition, the content of the coloring material is preferably 0.1% by mass or less with respect to the total amount of the reaction liquid composition. That is, it is preferable that the reaction liquid composition is not used with the intention of coloring.

1.4.2. 2 Manufacturing and Physical Properties

When the reaction liquid composition is attached to the recording medium such as a fabric by an ink jet method, the viscosity of the composition at 20°C is preferably 1.5 mPa·s or more and 15 mPa·s or less, more preferably 1.5 mPa·s or more and 7 mPa·s or less, and even more preferably 1.5 mPa·s or more and 5.5 mPa·s or less.

The surface tension of the reaction liquid composition at 25°C is 40 mN/m or less, preferably 38 mN/m or less, more preferably 35 mN/m or less, and even more preferably 30 mN/m or less from the viewpoint of ensuring appropriate wet spreadability to the recording medium. In addition, the surface tension is preferably 20 mN/m or more, and more preferably 25 mN/m or more.

The reaction liquid composition is obtained by mixing the components described above in an arbitrary order and, as necessary, carrying out filtration or the like to remove impurities. As a method of mixing each component, a method of sequentially adding materials to a container equipped with a stirring device such as a mechanical stirrer and a magnetic stirrer, and performing stirring and mixing is suitably used. As a filtration method, centrifugal filtration, filter filtration, and the like can be performed as necessary.

1.4.2. 3 Attachment Form

The reaction liquid attachment step is performed by an ink jet method. Any one of the reaction liquid attachment step, the ink attachment step, the coating liquid attachment step, and the softening liquid attachment step may be performed first on a predetermined region of the recording medium and the reaction liquid attachment step, the ink attachment step, the coating liquid attachment step, and the softening liquid attachment step may be performed at the same time.

The attachment amount of the reaction liquid composition in the reaction liquid attachment step is preferably 15 g/m² or more and 80 g/m² or less, more preferably 30 g/m² or more and 60 g/m² or less, and even more preferably 30 g/m² or more and 50 g/m² or less. 1.4.2. 4 Aggregation Properties for Coating Liquid Composition and Softening Liquid Composition

From the viewpoint of favorably exhibiting the effect (texture of the recorded matter) of the softening liquid composition, it is preferable that the softening liquid composition does not have aggregation properties due to the aggregating agent in the reaction liquid composition. However, in such a case, the bleeding of the softening liquid composition may occur. On the other hand, it is preferable that the coating liquid composition has aggregation properties due to the aggregating agent in the reaction liquid composition. When the coating liquid composition has the aggregation properties due to the aggregating agent of the reaction liquid composition, the bleeding of the softening liquid composition can be favorably suppressed.

1.4.3. Drying Step

The recording method according to the present embodiment may include a drying step between or before and after each step described above. The drying step can be performed by a unit that performs drying using a drying mechanism. Examples of the unit that performs drying using a drying mechanism include a unit that blows normal temperature air or warm air onto the recording medium (ventilation type), a unit that irradiates the recording medium with radiation (such as infrared rays) which generates heat, (radiation type), a member that comes into contact with the recording medium and conducts heat to the recording medium (conduction type), and a combination of two or more of these units. When the recording method has the drying step, it is preferable to perform the drying step by a drying mechanism that heats the recording medium. A case in which the drying mechanism that heats the recording medium is used as the drying mechanism is particularly referred to as a heating step.

The surface temperature of the recording medium at the time of attaching each composition to the recording medium is preferably 45°C or lower, and more preferably 10°C or higher and 45°C or lower. Further, the surface temperature is preferably 15°C or higher and 40°C or lower, and more preferably 20°C or higher and 30°C or lower. The temperature is a surface temperature of the portion of the recording surface of the recording medium, on which liquid attachment is applied in the attachment step, and is the highest temperature of the attachment step in the recording region. When the surface temperature is within the above range, the surface temperature is more preferably from a viewpoint of image quality, abrasion resistance, and suppression of clogging.

The method of heating the recording medium is not particularly limited, and examples thereof include a heat press method, a normal pressure steam method, a high pressure steam method, and a thermofix method. A heat source at the time of heating is not particularly limited, and for example, an infrared lamp and the like can be used. The heating temperature is preferably a temperature at which resin particles in the ink are fused and the medium such as moisture volatilizes. For example, the heating temperature is preferably 100°C or higher and 200°C or lower, more preferably 170°C or lower, and even more preferably 160°C or lower. Here, the heating temperature in the heating step refers to a surface temperature of an image and the like formed at a fabric that is a recording medium. The time for performing heating is not particularly limited, and is, for example, 30 seconds or more and 20 minutes or less.

In addition, it is also preferable not to have a drying step. Accordingly, an image having favorable color development can be obtained in a shorter time.

1.5. Order of Steps

In the recording method of the present embodiment, the coating liquid attachment step may be performed before the softening liquid attachment step, or may be performed at the same time as the softening liquid attachment step. In this manner, the bonding between the coating layer formed by the coating liquid composition and (fibers of) the recording medium is less likely to be inhibited, wet rubbing fastness can be further improved, and color development unevenness of the recorded matter can also be further reduced. This effect is due to the fact that since the softening agent included in the softening liquid composition has hydrophobicity, the bonding between the coating layer and (fibers of) the recording medium easily occurs compared with a case in which the softening liquid is first attached to the recording medium.

In addition, in the recording method of the present embodiment, the ink attachment step and the reaction liquid attachment step may be performed before the coating liquid attachment step, or may be performed at the same time as the softening liquid attachment step and the coating liquid attachment step. In this manner, the wet rubbing fastness is more remarkably exhibited.

Further, in the recording method of the present embodiment, the reaction liquid attachment step may be performed before the ink attachment step, or may be performed at the same time as the ink attachment step. In this manner, an image having more favorable color developability can be formed.

1.6. Actions and Effects

According to the recording method of the present embodiment, by attaching the softening liquid composition to a recording medium, the softening agent is attached to the fibers of the recording medium (due to high hydrophobicity), the molecules of the fibers are easily moved, and the hardness of the fibers is reduced. This is because the fibers become more slippery, and in a case of natural fibers, the fibers are prevented from shrinking by inhibiting the bonding between the OH groups of the fibers. Therefore, the texture of the recorded matter can be improved. In addition to this effect, the hydrophobic coloring material such as a pigment and a disperse dye derived from the ink composition exposed on the surface layer of the recording medium is covered with the resin of the coating liquid, and the amount of the resin in the coating liquid is large. Therefore, a resin coating film including a strong coloring material can be formed. Accordingly, the coloring material is less likely to fall off, and the wet rubbing fastness of the recorded matter can be improved. In addition, the pigment and the like in the ink composition can be aggregated by the aggregating agent of the reaction liquid composition, and the color developability of the recorded matter can also be improved.

In addition, according to the recording method of the present embodiment, when the softening liquid composition is attached to the recording medium, the softening agent is attached to the fibers of the recording medium (due to the high hydrophobicity), and the molecules of the fibers are easily moved, and the hardness of the fibers is reduced. This is because the fibers become more slippery, and in a case of natural fibers, the fibers are prevented from shrinking by inhibiting the bonding between the OH groups of the fibers. Therefore, the texture of the recorded matter can be improved.

On the other hand, since the softening agent is a hydrophobic material, the softening agent has strong affinity with the hydrophobic coloring material. Therefore, the hydrophobic coloring material is less likely to be incorporated into a fixing resin on the recording medium derived from other compositions. Accordingly, the hydrophobic coloring material easily falls off the recording medium and the wet rubbing fastness tends to deteriorate.

However, according to the recording method of the present embodiment, by using the coating liquid in combination, the hydrophobic coloring material exposed on the surface layer of the recording medium is covered with the resin of the coating liquid, and the amount of the resin in the coating liquid is large. Therefore, a resin coating film including a strong coloring material can be formed. Accordingly, the hydrophobic coloring material is less likely to fall off, the wet rubbing fastness of the recorded matter can be improved, and the texture can also be improved.

Such an effect is obtained by being imparted by different attachment steps of the softening liquid and the coating liquid. That is, this is because, when the softening agent and the resin particles are contained in one composition and the softening agent is attached to the recording medium, the softening agent is uniformly mixed with the resin particles in the composition or in the attached liquid droplets, the softening agent enters the coating film of the resin to make the resin network less likely to be formed, and thus the wet rubbing fastness cannot be improved. Therefore, in this recording method, by blending the softening agent and the resin particles in different compositions and separately attaching the softening agent and the resin particles to the recording medium, the softening agent can be prevented from entering the coating film of the resin, and thus both the texture of the recorded matter and the wet rubbing fastness can be achieved.

2. Composition Set

A composition set according to the present embodiment includes the above-described softening liquid composition, and the above-described coating liquid composition, in which a content of the softening agent is 60% by mass or more with respect to a total amount of non-volatile components in the softening liquid composition, a content of the resin particles is 80% by mass or more with respect to a total amount of non-volatile components in the coating liquid composition, the coating liquid composition is used by being discharged by an ink jet method, and the softening liquid composition is used by being discharged by an ink jet method or a spray method.

According to the composition set of the present embodiment, by attaching the softening liquid composition to a recording medium, the softening agent is attached to the fibers of the recording medium (due to high hydrophobicity), the molecules of the fibers are easily moved, and the hardness of the fibers is reduced. This is because the fibers become more slippery, and in a case of natural fibers, the fibers are prevented from shrinking by inhibiting the bonding between the OH groups of the fibers. Therefore, the texture of the recorded matter can be improved.

In addition, according to the composition set, by using the coating liquid in combination, the hydrophobic coloring material exposed on the surface layer of the recording medium is covered with the resin of the coating liquid, and the amount of the resin in the coating liquid is large. Therefore, a resin coating film including a strong coloring material can be formed. Accordingly, the hydrophobic coloring material is less likely to fall off, the wet rubbing fastness of the recorded matter can be improved, and the texture can also be improved.

3. Example of Recording Apparatus

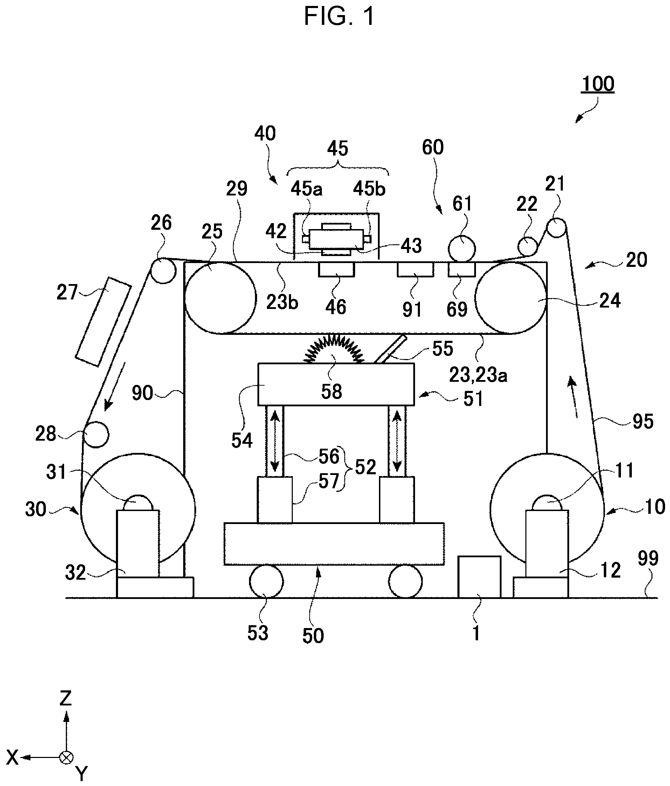

An example of an ink jet textile printing apparatus (recording apparatus) which includes an ink jet head and which is configured to be applicable to the recording method according to the present embodiment will be described with reference to FIG. 1.

In addition, the scales of each layer and each member shown in FIG. 1 are made different from the actual scales thereof so as to be visually recognized in the drawing. In addition, for the convenience of illustration in FIG. 1, as three axes orthogonal to each other, an X axis, a Y axis, and a Z axis are shown, a front end side of each arrow indicating an axial direction shown in the drawing is represented by "+ side", and a base end side thereof is represented by "- side". A direction parallel to the X axis, a direction parallel to the Y axis, and a direction parallel to the Z axis are represented by "X axis direction", "Y axis direction", and "Z axis direction", respectively.

3.1. Overall Schematic Configuration

FIG. 1 is a schematic view showing a schematic overall configuration of a recording apparatus 100. First, the overall configuration of the recording apparatus 100 will be described with reference to FIG. 1.

As shown in FIG. 1, the recording apparatus 100 includes a medium transport portion 20, a medium adhesion portion 60, a belt support portion 91, a print portion 40, a heating unit 27, a washing unit 50, and the like. In the recording apparatus 100, at least one of the medium adhesion portion 60 and the belt support portion 91 corresponds to a heating portion to heat an endless belt 23. In addition, the recording apparatus 100 also includes a control portion 1 to control each of these portions described above. Each portion of the recording apparatus 100 is attached to a frame portion 90.

In addition, when the heating portion to heat the endless belt is provided, the heating portion may be provided upstream than the print portion 40 in the transport direction and may also be provided at a place different from those of the medium adhesion portion 60 and the belt support portion 91. For example, the heating portion may be located upstream than the medium adhesion portion 60 in the transport direction. With such a configuration, the heating portion can also dry the endless belt 23 wetted in the washing. In addition, the heating portion may be a portion to heat the endless belt in a non-contact manner.

The medium transport portion 20 transports the fabric 95 in the transport direction. The medium transport portion 20 includes a medium supply portion 10, transport rollers 21 and 22, the endless belt 23, a belt rotation roller 24, a belt drive roller 25 functioning as a drive roller, transport rollers 26 and 28, and a medium recovery portion 30.

3.2. Medium Transport Portion

First, the transport path of the fabric 95 from the medium supply portion 10 to the medium recovery portion 30 will be described. In addition, in FIG. 1, a direction along a direction in which the gravity works is represented by the Z axis direction, a direction in which the fabric 95 is transported in the print portion 40 is represented by the +X axis direction, and a width direction of the fabric 95 intersecting both the Z axis direction and the X axis direction is represented by the Y axis direction. Further, the positional relationship along the transport direction of the fabric 95 or the moving direction of the endless belt 23 is also represented by "upstream" or "downstream".

The medium supply portion 10 is a portion to supply the fabric 95 on which an image is to be formed to a print portion 40 side. The medium supply portion 10 includes a supply shaft portion 11 and a bearing portion 12. The supply shaft portion 11 is formed to have a cylindrical shape or a columnar shape and is provided to be rotatable in a circumferential direction. The strip-shaped fabric 95 is wound around the supply shaft portion 11 in a roll shape. The supply shaft portion 11 is detachably attached to the bearing portion 12. Accordingly, the fabric 95 wound around the supply shaft portion 11 in advance can be attached to the bearing portion 12 together with the supply shaft portion 11.

The bearing portion 12 rotatably supports both ends of the supply shaft portion 11 in a shaft direction. The medium supply portion 10 includes a rotation drive portion (not shown) that rotatably drives the supply shaft portion 11. The rotation drive portion rotates the supply shaft portion 11 in a direction to which the fabric 95 is supplied. The operation of the rotation drive portion is controlled by the control portion 1. The transport rollers 21 and 22 relay the fabric 95 from the medium supply portion 10 to the endless belt 23.

The endless belt 23 is held between at least two rollers to rotate the endless belt 23, and since the endless belt 23 is rotationally moved, the fabric 95 is transported in the transport direction (+X axis direction) while being supported by the endless belt 23. Specifically, the endless belt 23 is a seamless belt formed such that both end portions of a strip-shaped belt are seamlessly coupled to each other and is set between two rollers of the belt rotation roller 24 and the belt drive roller 25.

The endless belt 23 is held in a state where a predetermined tension is applied thereto so that a portion between the belt rotation roller 24 and the belt drive roller 25 is held flat along the horizontal direction. An adhesive 29 provided for adhesion of the fabric 95 is applied to a surface (support surface) 23a of the endless belt 23. That is, the endless belt 23 is provided with an adhesive layer formed from the adhesive 29. The fabric 95 is attached to the endless belt 23 with the adhesive 29 interposed therebetween. The endless belt 23 supports (holds) the fabric 95 which is supplied from the transport roller 22 and which is in close contact with the adhesive 29 by the medium adhesion portion 60.

The adhesive 29 preferably increases its adhesiveness by heating. Since the adhesive 29 which increases its adhesiveness by heating is used, the fabric 95 can be preferably in close contact with the adhesive layer. As the adhesive 29 as described above, for example, a hot melt-based adhesive having a thermoplastic elastomer SIS (styrene-isoprene-styrene) as a main component may be used.

The belt rotation roller 24 and the belt drive roller 25 support an inner circumferential surface 23b of the endless belt 23. Between the belt rotation roller 24 and the belt drive roller 25, a contact portion 69 to support the endless belt 23, the belt support portion 91, and a platen 46 are provided. The contact portion 69 is provided in a region facing a press portion 61 which will be described later with the endless belt 23 interposed therebetween, the platen 46 is provided in a region facing the print portion 40 with the endless belt 23 interposed therebetween, and the belt support portion 91 is provided between the contact portion 69 and the platen 46. Since the contact portion 69, the belt support portion 91, and the platen 46 support the endless belt 23, the endless belt 23 is prevented from being vibrated in conjunction with the movement of the endless belt 23.

The belt drive roller 25 is a drive portion to transport the fabric 95 in the transport direction by rotating the endless belt 23 and has a motor (not shown) to rotationally drive the belt drive roller 25. The belt drive roller 25 is provided downstream than the print portion 40 in the transport direction of the fabric 95, and the belt rotation roller 24 is provided upstream than the print portion 40. When the belt drive roller 25 is rotatably driven, the endless belt 23 is rotated in conjunction with the rotation of the belt drive roller 25, and by the rotation of the endless belt 23, the belt rotation roller 24 is rotated. By the rotation of the endless belt 23, the fabric 95 supported by the endless belt 23 is transported in the transport direction (+X axis direction), and in the print portion 40 which will be described later, an image is formed at the fabric 95.

In the example shown in FIG. 1, the fabric 95 is supported at a side (+Z axis side) at which the surface 23a of the endless belt 23 faces the print portion 40 and the fabric 95 is transported together with the endless belt 23 from a belt rotation roller 24 side to a belt drive roller 25 side. In addition, at a side (-Z axis side) at which the surface 23a of the endless belt 23 faces the washing unit 50, the endless belt 23 is only moved from the belt drive roller 25 side to the belt rotation roller 24 side.

The transport roller 26 peels away the fabric 95 on which an image is formed from the adhesive 29 provided on the endless belt 23. The transport rollers 26 and 28 relay the fabric 95 from the endless belt 23 to the medium recovery portion 30.

The medium recovery portion 30 recovers the fabric 95 transported from the medium transport portion 20. The medium recovery portion 30 includes a winding shaft portion 31 and a bearing portion 32. The winding shaft portion 31 is formed to have a cylindrical or a columnar shape and is provided to be rotatable in a circumferential direction. The strip-shaped fabric 95 is wound around the winding shaft portion 31 in a roll shape. The winding shaft portion 31 is detachably attached to the bearing portion 32. Accordingly, the fabric 95 wound around the winding shaft portion 31 is removed together with the winding shaft portion 31.

The bearing portion 32 rotatably supports both ends of the winding shaft portion 31 in the shaft direction. The medium recovery portion 30 includes a rotation drive portion (not shown) which rotatably drives the winding shaft portion 31. The rotation drive portion rotates the winding shaft portion 31 in a direction in which the fabric 95 is wound. The operation of the rotation drive portion is controlled by the control portion 1.

Next, the heating portion, the print portion 40, the heating unit 27, and the washing unit 50, which are provided along the medium transport portion 20, will be described.

3.3. Heating Portion

It is preferable that a heater which heats the endless belt 23 is provided in at least one of the contact portion 69 and the belt support portion 91. The heater forms the heating portion. When the heater is provided in the contact portion 69, since a pressing force and heat can be applied to the endless belt 23 by the press portion 61, the adhesion of the fabric 95 to the endless belt 23 can be preferably improved. Accordingly, when being provided in the contact portion 69 or the belt support portion 91, the heater is more preferably provided at the contact portion 69.

The heating portion softens the adhesive layer by heating the adhesive layer to exhibit adhesiveness and improves the adhesion between the fabric 95 and the adhesive layer. Accordingly, the fabric 95 is prevented from being moved on the endless belt 23, and thus, favorable transport accuracy can be obtained.

When the heater is provided in at least one of the contact portion 69 and the belt support portion 91 and the endless belt 23 is heated, the temperature of the surface 23a of the endless belt 23 is preferably 80°C or lower, more preferably 70°C or lower, and even more preferably 60°C or lower. When the temperature of the surface 23a of the endless belt 23 is within the above range, the reactivity of the resin particles contained in the ink composition is suppressed, and the washing of the belt can be more easily performed in some cases. The lower limit of the temperature of the surface 23a of the endless belt 23 is not particularly limited as long as the adhesiveness of the adhesive layer is obtained, and the lower limit is preferably 30°C or higher, more preferably 35°C or higher, and even more preferably 40°C or higher. The temperature of the surface 23a of the endless belt 23 can be measured, for example, by a radiation type thermometer, a contact type thermometer, or the like, and the temperature described above is more preferably measured by a radiation type thermometer.

When the heater is provided in at least one of the contact portion 69 and the belt support portion 91, a temperature detection portion (not shown) which detects the surface temperature of the endless belt 23 may be provided. As the temperature detection portion, for example, a thermocouple or the like can be used. Accordingly, since the heater is controlled by the control portion 1 based on the temperature detected by the temperature detection portion, the endless belt 23 can have a predetermined temperature. In addition, the temperature detection portion may use a non-contact type thermometer using infrared rays.

3.4. Print Portion

The print portion 40 is arranged at an upper side (+Z axis side) with respect to the arrangement position of the endless belt 23 and performs printing on the fabric 95 placed on the surface 23a of the endless belt 23. The print portion 40 includes an ink jet head 42, a carriage 43 on which the inkjet head 42 is mounted, and a carriage moving portion 45 which moves the carriage 43 in the width direction (Y axis direction) of the fabric 95 intersecting the transport direction.

The ink jet head 42 is a unit that ejects the liquid composition supplied from a liquid cartridge (not shown) from a plurality of nozzles to the fabric 95 under control by the control portion 1 to attach the liquid composition to the fabric. The inkjet head 42 includes a plurality of nozzles discharging the liquid composition to the fabric 95 to which the liquid composition is attached and attaching the liquid composition to the fabric 95. The plurality of nozzles are arrayed in a row to form a nozzle row, and the nozzle row is individually arranged corresponding to the liquid composition. The liquid composition are supplied from each liquid cartridge to the ink jet head 42 and discharged in the form of liquid droplets from the nozzles by an actuator (not shown) provided in the ink jet head 42. The discharged liquid droplets of the liquid composition land on the fabric 95, and an image, a text, a pattern, a color, and the like are formed in the textile printing region of the fabric 95.

The liquid composition referred to here can be the softening liquid composition, the coating liquid composition, the ink composition, and the reaction liquid composition described above. Further, the types and number of these liquid compositions can be set appropriately.

Here, in the ink jet head 42, a piezoelectric element is used as an actuator which is a drive unit, but the method is not limited thereto. For example, an electromechanical conversion element to displace a vibration plate functioning as an actuator by electrostatic adsorption or an electrothermal conversion element to discharge a liquid composition in the form of liquid droplets by air bubbles generated by heating may be used.

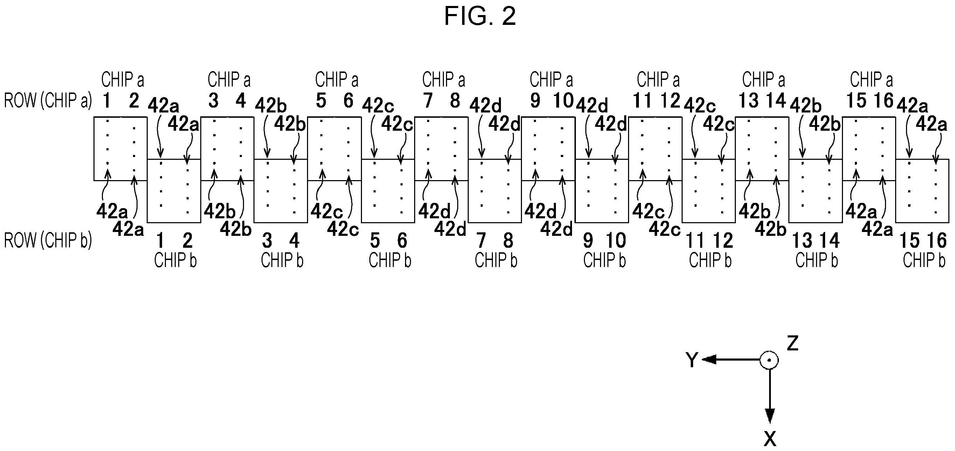

FIG. 2 is a schematic view showing an example of an array of nozzle rows of the ink jet heads. In the example in FIG. 2, the ink jet head is provided with a nozzle row 42a having a nozzle group that discharges the third ink (coating liquid composition), a nozzle row 42b having a nozzle group that discharges the fourth ink (softening liquid composition), a nozzle row 42c having a nozzle group that discharges the second ink (ink composition), and a nozzle row 42d having a nozzle group that discharges the first ink (reaction liquid composition). In addition, the region surrounded by the frame in FIG. 2 represents one chip, and the one chip is configured by two rows of nozzle groups. Then, eight chips a that are positioned on the upstream in an X direction, and eight chips b that are positioned on the downstream are each arranged along a Y direction to form a row of the chip a and a row of the chip b. In this example, these 16 chips are arranged in a zigzag pattern (in a staggered manner) along the Y direction and are included in the carriage.

Further, for example, the nozzles in two nozzle rows for one chip are arranged so as to be shifted from each other in the X direction, and are arranged in a zigzag (staggered manner) along the X direction. On the other hand, the row of the chip a and the row of the chip b arranged side by side in the Y direction are aligned along the Y direction.

Each row of the chips on the upstream and the downstream in the X direction is can attach each composition to the same region of the fabric at appropriate timing in one main scanning. In addition, two rows of the chips are arranged so as to be shifted in a sub-scanning direction (X axis direction), and depending on the distance of movement of the fabric by the sub-scanning, the region to which each composition is attached can be changed or each composition can be attached multiple times to the same region.

The nozzle group performing discharge means a nozzle group used for recording in the recording method. When there is an image to be temporarily recorded in a region of the fabric facing the nozzle group at a time of performing the main scanning (Y-axis direction), the nozzle group is a nozzle group that can discharge the liquid composition from the nozzle, and the nozzle group continuous in the transport direction (+X-axis direction). Therefore, although the nozzle group itself exists, the nozzle group not used for recording in the recording method is not included in the nozzle group performing discharge.

The carriage moving portion 45 is provided on the upper side (+Z axis side) of the endless belt 23. The carriage moving portion 45 has a pair of guide rails 45a and 45b extending along the Y axis direction. The ink jet head 42 is supported by the guide rails 45a and 45b so as to be reciprocally movable along the Y axis direction together with the carriage 43.

The carriage moving portion 45 includes a moving mechanism (not shown) and a power source. As the moving mechanism, for example, a mechanism in which a ball screw and a ball nut are combined, a linear guide mechanism, or the like can be used. The carriage moving portion 45 includes a motor (not shown) as a power source for moving the carriage 43 along the guide rails 45a and 45b. As the motor, various motors such as a stepping motor, a servo motor, and a linear motor can be used. When the motor is driven by the control of the control portion 1, the ink jet head 42 moves in the Y axis direction together with the carriage 43.

### 3.5. Heating Unit

The heating unit 27 may be provided between the transport roller 26 and the transport roller 28. The heating unit 27 heats the ink composition, the softening liquid composition, and the coating liquid composition discharged on the fabric 95. Accordingly, there is a tendency that the reaction of the resin particles contained in the ink composition can sufficiently proceed. Since the resin particles sufficiently react, an image having favorable rubbing fastness may be formed in some cases. The heating unit 27 may be used in order to dry the fabric 95. In the heating unit 27, for example, an IR heater is contained, and by driving the IR heater, the ink composition and the coating liquid composition discharged on the fabric 95 can be made to react to each other in a short time. Accordingly, the strip-shaped fabric 95 on which an image or the like is formed can be wound around the winding shaft portion 31.

### 3.6. Washing Unit

The washing unit 50 is arranged between the belt rotation roller 24 and the belt drive roller 25 in the X axis direction. The washing unit 50 includes a washing portion 51, a press portion 52, and a movement portion 53. The movement portion 53 integrally moves the washing unit 50 along a floor surface 99 and then fixes the washing unit 50 at a predetermined position.

The press portion 52 is an elevating device formed, for example, of an air cylinder 56 and a ball bush 57 and enables the washing portion 51 provided on the upper side to come into contact with the surface 23a of the endless belt 23. The washing portion 51 is set between the belt rotation roller 24 and the belt drive roller 25 in a state in which a predetermined tension is applied, and washes the surface (support surface) 23a of the endless belt 23 moving from the belt drive roller 25 toward the belt rotation roller 24 from a bottom side (-Z axis direction).

The washing portion 51 includes a washing bath 54, a washing roller 58, and a blade 55. The washing bath 54 is a tank that stores a washing liquid used for washing ink and foreign matter attached to the surface 23a of the endless belt 23, and the washing roller 58 and the blade 55 are provided inside the washing bath 54. As the washing liquid, for example, water or a water-soluble solvent (such as an aqueous alcohol solution) may be used, and as necessary, a surfactant and a defoaming agent may also be added.

When the washing roller 58 is rotated, the washing liquid is supplied to the surface 23a of the endless belt 23, and at the same time, the washing roller 58 and the endless belt 23 are rubbed with each other. Accordingly, the ink composition, the fibers of the fabric 95, and the like attached to the endless belt 23 are removed by the washing roller 58.

The blade 55 may be formed of, for example, a flexible material such as a silicone rubber. The blade 55 is provided downstream than the washing roller 58 in the transport direction of the endless belt 23. Since the endless belt 23 and the blade 55 are rubbed with each other, the washing liquid remaining on the surface 23a of the endless belt 23 is removed.

According to such a recording apparatus 100, the recording method of the present embodiment can be easily performed.

### 4. Examples and Comparative Examples

Hereinafter, the present disclosure will be specifically described with reference to Examples, and the present disclosure is not limited to these Examples. Hereinafter, "part" and "%" are based on mass unless otherwise specified. Unless otherwise specified, the evaluation was performed in an environment of a temperature of 25°C and a relative humidity of 40.0%. 4.1. Ink Preparation

A first ink (reaction liquid composition), a second ink (ink composition), a third ink (coating liquid composition), and a fourth ink (softening liquid composition) were prepared as follows.

### 4.1.1. Preparation of Reaction Liquid Composition

Each component was placed in a container so as to have the composition shown in Table 1, mixed and stirred with a magnetic stirrer for 2 hours, and then filtered through a membrane filter having a pore size of 5 $\mu$m to obtain first inks (reaction liquids) "inks 1-1 to 1-7" used in Examples and Comparative Examples. The numerical values in the tables represent the amount of active components.

4.1.2. Preparation of Ink Composition

Each component was placed in a container so as to have the composition shown in Table 2, mixed and stirred with a magnetic stirrer for 2 hours, and then filtered through a membrane filter having a pore size of 5 μm to obtain second inks (ink compositions) "inks 2-1 to 2-3" used in Examples and Comparative Examples. The numerical values in the tables represent the amount of active components. In addition, as the anionic self-dispersing pigment and the anionic resin dispersed pigment, pigment dispersion liquids prepared as follows were used. Self-Dispersing Pigment

500 g of carbon black bulk powder prepared by a furnace method (primary particle diameter = 18 nm, BET specific surface area = 180 m$^2$/g, DBP absorption amount = 186 mL/100 g) was added to 3750 g of ion exchange water, and the temperature was raised to 45°C while stirring using a dissolver. After that, 30000 g of an aqueous solution of sodium hypochlorite (effective chlorine concentration = 12%) was added dropwise over 3.5 hours at 45°C while pulverizing with a sand mill using zirconia beads having a diameter of 0.8 mm. The pulverization with the sand mill was then continued for a further 30 minutes to obtain a reaction liquid containing a self-dispersing type carbon black. The reaction liquid was filtered using 400 mesh wire netting, and thus the zirconia beads and unreacted carbon black were separated from the reaction liquid. A 5% potassium hydroxide aqueous solution was added to the reaction liquid obtained through the separation to adjust the pH to 7.5. Desalination and purification were then carried out using an ultrafilter membrane until the electrical conductivity of the liquid reached 1.5 mS/cm. Desalination and purification were then further carried out using an electrodialyser until the electrical conductivity of the liquid reached 1.0 mS/cm. The liquid was then concentrated until the self-dispersing type carbon black concentration reached 17% by mass. The concentrate was subjected to a centrifugal separator, coarse particles were removed, and filtration was carried out with a 0.6 μm filter. Ion exchange water was added to the filtrate obtained to dilute the filtrate until the self-dispersing type carbon black concentration reached 15 % by mass, and dispersion was carried out to obtain self-dispersing pigment dispersion liquid.

Resin Dispersed Pigment

To 15 parts by mass of carbon black, 10 parts by mass of ammonium salt (weight average molecular weight: 10000) of a styrene-acrylic acid copolymer as a dispersant was added as a polymer component and 55 parts by mass of ion exchange water was added thereto and sufficiently mixed. Then, the mixture was dispersed for 2 hours together with glass beads (diameter: 1.7 mm, 1.5 times the amount of the mixture) in a sand mill (manufactured by Yasukawa Seisakusho Co., Ltd.). After dispersion, the glass beads were removed to obtain a resin dispersed pigment dispersion liquid.

4.1.3. Preparation of Coating Liquid Composition

Each component was placed in a container so as to have the composition shown in Table 3, mixed and stirred with a magnetic stirrer for 2 hours, and then filtered through a membrane filter having a pore size of 5 μm to obtain third inks (coating liquid compositions) "inks 3-1 to 3-4" used in Examples and Comparative Examples. The numerical values in the tables represent the amount of active components.

4.1.4. Preparation of Softening Liquid Composition

Fourth inks (softening liquid compositions) "inks 4-1 to 4-9" shown in Table 4 were obtained as follows. The numerical values in the tables represent the amount of active components.

inks 4-2, 4-7, and 4-8

90 g of dimethyl silicone oil (KF-96H-10000 cs, Shin-Etsu Chemical Co., Ltd.), 171.5 g of ion exchange water, 6.4 g of polyoxyethylene tridecyl ether (NEWCOL 1310, Nippon Nyukazai Co., Ltd.), 6.4 g of polyoxyethylene tridecyl ether (NEWCOL 1305, Nippon Nyukazai Co., Ltd.), and 25.7 g of 1,2-hexanediol were placed in a beaker, and the contents of the beaker were stirred for 30 minutes at 50°C at a rotation speed of 2000 rpm using a homomixer (Homo Mixer MARK II Model 2.5, manufactured by PRIMIX Corporation), and left to stand for 30 minutes. Next, the contents of the beaker were filtered through a 10 μm membrane filter to obtain 300 g of an emulsion in which oil particles containing nonionic silicone oil were dispersed. Subsequently, ion exchange water and glycerin were added thereto and stirred to prepare ink 4-2 shown in Table 4.

inks 4-7 and 4-8 were prepared in such a manner that the amount of dimethyl silicone oil (KF-96H-10000 cs, Shin-Etsu Chemical Co., Ltd.) was changed, emulsion was obtained in the same manner, and ion exchange water, glycerin, and polyvinylpyrrolidone were additionally added and stirred to have the concentrations shown in Table 4.

ink 4-1

90 g of amino-modified silicone oil (KF-868, functional group equivalent: 8, 800 g/mol, manufactured by Shin-Etsu Chemical Co., Ltd.), 173.2g of ion exchange water, 5.1g of polyoxyethylene tridecyl ether (NEWCOL 1310, Nippon Nyukazai Co., Ltd.), 25.7 g of 1,2-hexanediol, and 6 g of lactic acid were placed in a beaker, and the contents of the beaker were stirred for 30 minutes at 50°C at a rotation speed of 2000 rpm using a homomixer (HOMO MIXER MARK II Model 2.5, manufactured by PRIMIX Corporation), and left to stand for 30 minutes. Next, the contents of the beaker were filtered through a 10 μm membrane filter to obtain 300 g of an emulsion in which oil particles containing amino-modified silicone oil were dispersed. Subsequently, ion exchange water and glycerin were added and stirred to prepare ink 4-1.

inks 4-3 to 4-6

51.4 g of each softening agent shown in Table 4, 210.5 g of ion exchange water, 6.4 g of polyoxyethylene tridecyl ether (NEWCOL 1310, Nippon Nyukazai Co., Ltd.), 6.4 g of polyoxyethylene tridecyl ether (NEWCOL 1305, Nippon Nyukazai Co., Ltd.), 25.7 g of 1,2-hexanediol, and 6 g of lactic acid were placed in a beaker, and the contents of the beaker were stirred for 30 minutes at 50°C at a rotation speed of 2000 rpm using a homomixer (Homo Mixer MARK II Model 2.5, manufactured by PRIMIX Corporation), and left to stand for 30 minutes. Next, the contents of the beaker were filtered through a 10 μm membrane filter to obtain 300 g of a liquid containing each softening agent. Subsequently, ion exchange water and glycerin were added and stirred to prepare inks 4-3 to 4-6.

ink 4-9

64.3 g of polyoxyethylene dilaurate, 191.2 g of ion exchange water, 6.4 g of polyoxyethylene tridecyl ether (NEWCOL 1310, Nippon Nyukazai Co., Ltd.), 6.4 g of polyoxyethylene tridecyl ether (NEWCOL 1305, Nippon Nyukazai Co., Ltd.), 25.7 g of 1,2-hexanediol, and 6 g of lactic acid were placed in a beaker, and the contents of the beaker were stirred for 30 minutes at 50°C at a rotation speed of 2000 rpm using a homomixer (Homo Mixer MARK II Model 2.5, manufactured by PRIMIX Corporation), and left to stand for 30 minutes. Next, the contents of the beaker were filtered through a 10 μm membrane filter to obtain 300 g of a liquid containing softening agents and polyoxyethylene dilaurate. Subsequently, ion exchange water, glycerin, and polyvinylpyrrolidone were additionally added and stirred to have the concentrations shown in Table 4 to prepare ink 4-9.

"OLFINE E1010" shown in Tables 1 to 3 is an acetylene glycol-based surfactant manufactured by Nissin Chemical Industry Co., Ltd.

4.2. Evaluation Method

4.2.1. Recording Test

Using an apparatus modified from Evo Tre 16 (manufactured by Seiko Epson Corporation), printing was performed on a recording medium of 100% cotton white broad cloth (#4000, manufactured by Nisshinbo Holdings Inc.) under the conditions described in Table 5 to Table 9. Main scanning was performed multiple times (2 times, 4 times, 8 times, 12 times, or 16 times) on the same scanning region to form a solid pattern image of 20 cm × 5 cm in a fabric as a medium to be recorded. Subsequently, a 5 cm fabric was transported in the sub-scanning direction, printing was performed again on the same scanning region, and a solid pattern image of 20 cm × 10 cm was formed in the fabric as a medium to be recorded by two times of printing.

After image formation, the resulting recorded matter was left to stand for 3 minutes, a heating treatment was then started at 160°C for 3 minutes in an oven, and drying was performed to prepare a printed textile according to each Example and each Comparative Example. In addition, the "solid pattern image" means an image in which dots are uniformly formed in the entire surface of the recording region (main scanning direction × sub-scanning direction: 20 cm × 10 cm) so that the application amount of each ink has the numerical value described in Examples.

As the ink jet head, a head unit was used in which a distance between nozzles in the sub-scanning direction was 600 dpi and two head chips were arranged in the sub-scanning direction so that the length of the nozzle row was more than 2 inches.

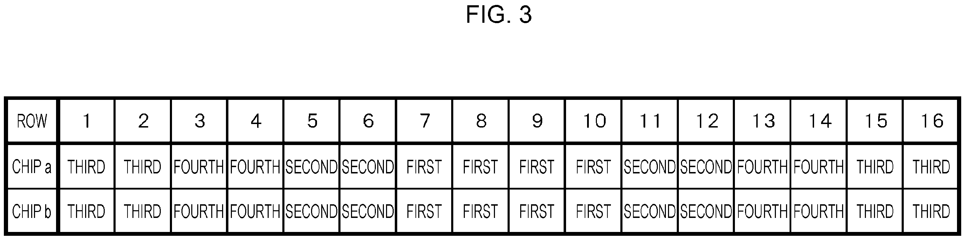

In each example, the inkjet head as shown in FIG. 2 was used and filled with each ink such that the head nozzle groups discharging each ink are arranged in the main scanning direction as shown in FIG. 2. FIG. 3 is a table showing inks discharged from the nozzle rows of the ink jet head used in Examples and Comparative Examples. Further, the "first to fourth" in FIG. 3 represent the first ink (reaction liquid) to the fourth ink (softening liquid), respectively, and represent the inks discharged from each nozzle row shown in the drawing.

In addition, in each example, each ink was charged so that the head nozzle group discharging each ink was arranged in the main scanning direction as shown in the head configuration in FIG. 3. A plurality of nozzle rows are arranged in parallel in a left-right direction in FIG. 3. The chip a and the chip b are vertically shown in FIG. 3, but in an actual nozzle array, the chips are arranged as shown in FIG. 2. In other words, each row is provided with the chip a and the chip b arranged on the left and right. The chip a and the chip b each have two nozzle rows. The compositions discharged from each row are shown in FIG. 3. A blank space indicates that the corresponding composition is not discharged. Rows 1 to 16 of the chip a in FIG. 2 correspond to rows 1 to 16 of the chip a in FIG. 3, and rows 1 to 16 of the chip b in FIG. 2 correspond to rows 1 to 16 of the chip b in FIG. 3.

In addition, only the fourth ink in Example 2 was applied by a spray. In the examples in which the first ink, the second ink, the third ink, and the fourth ink were used excluding Example 2, all inks were applied by the ink jet method.

In Example 29, the first ink (reaction liquid) and the third ink (coating liquid) were attached up to 2.0 mm outside the attachment region of the fourth ink (softening liquid). In other Examples and Comparative Examples, the third ink (coating liquid) and the fourth ink (softening liquid) were attached to the same region as the first ink (reaction liquid).

4.2.2. Evaluation of Color Development (Black)

For the printed matter obtained by the above printing method, the surface of the printed image was determined according to the following criteria by measuring the optical density (OD value, Status E) of black of the printed image using a colorimeter (FD-7, manufactured by Konica Minolta Inc.). When the evaluation was rated as C or higher, the printed matter was able to withstand actual use.

Determination Criteria

SS: OD value of 1.60 or more
S: OD value of 1.51 or more and less than 1.60
A: OD value of 1.46 or more and less than 1.51
B: OD value of 1.43 or more and less than 1.46
C: OD value of 1.35 or more and less than 1.43

4.2.3. Evaluation of Bleeding

A printed matter obtained by starting a heat treatment for 3 minutes at 160°C in an oven at the time of being left for 60 minutes after image formation, and then dried in the above-described printing method was prepared for each example. In addition, a printed matter at the time of drying after performing printing with the first ink (reaction liquid) and the second ink (ink composition) of Example 1 was prepared as a reference. The boundary between the printed image region and the unprinted non-printing region was observed, and a difference in the length (mm) in the sub-scanning direction of the printed image, which was left to stand for 60 minutes in each example, with respect to the printed image as the reference, was determined according to the following criteria. When the evaluation was rated as C or higher, the printed matter was able to withstand actual use.

Determination Criteria

S: The difference in length is 1 mm or less.
A: The difference in length is more than 1 mm and 3 mm or less.
B: The difference in length is more than 3 mm and 7 mm or less.
C: The difference in length is more than 7 mm and 12 mm or less.

4.2.4. Evaluation of Yellowing

A printed cloth obtained by performing recording on a recording cloth at 30 g/m$^2$ only with the fourth ink (softening liquid) of each example in the above-described printing method, and drying the recorded matter by the above-described method was prepared, and the surface of the printed image was measured using a colorimeter (FD-7, manufactured by Konica Minolta Inc.) and was used as a sample. In addition, a cloth that was dried in an oven at 160°C for 3 minutes without printing with a printer in the above-described method was prepared, L*, a*, and b* values were measured in the same manner, and the cloth was used as a reference. A color difference ΔE00 (ΔE2000) of the sample with respect to the reference was calculated and determined according to the following criteria.

Determination Criteria

A: The color difference ΔE00 is 2 or less.
B: The color difference ΔE00 is more than 2 and 7 or less.

4.2.5. Evaluation of Abrasion Resistance (Dry)

For the printed textile prepared by using the above-described printing method, the image of the printed textile was rubbed 10 times with shirting (white cotton cloth) using a crock meter (FI-306, manufactured by Tester Sangyo Co., Ltd.) with a load of 9N. Thereafter, for the region contaminated with the ink of the rubbed shirting, the optical density (OD, Status E) of black of the printed image was measured using a colorimeter (FD-7, manufactured by Konica Minolta Inc.) and determined according to the following criteria. When the evaluation was rated as C or higher, the printed matter was able to withstand actual use.

Determination Criteria

S: The OD of black is 0.15 or less.
A: The OD of black is more than 0.15 and 0.19 or less.
B: The OD of black is more than 0.19 and 0.23 or less.
C: The OD of black is more than 0.23 and 0.33 or less.

4.2.6. Evaluation of Abrasion Resistance (wet)

For the printed textile of each example prepared by using the above-described printing method, the image of the printed textile was rubbed 10 times with shirting (white cotton cloth) wetted with water in an amount equal to the weight of the cloth using a crock meter (FI-306, manufactured by Tester Sangyo Co., Ltd.) with a load of 9N. Thereafter, for the region contaminated with the ink of the rubbed shirting, the optical density (OD, Status E) of black of the printed image was measured using a colorimeter (FD-7, manufactured by Konica Minolta Inc.) and determined according to the following criteria. When the evaluation is rated as B or higher, it can be said that satisfactory effects are obtained.

Determination Criteria

S: The OD of black is 0.26 or less.
A: The OD of black is more than 0.26 and 0.31 or less.
B: The OD of black is more than 0.31 and 0.45 or less.
C: The OD of black is more than 0.45.

4.2.7. Evaluation of Texture (Shear Hardness G)

The shear rigidity G (gf/cm/degree) of the printed textile of each example was tested using a tensile shear tester ("KES-FB1-A" manufactured by Kato Tech Co., Ltd.). Next, as a reference, a printed textile dried after printing with only the first ink and the second ink excluding the third ink and the fourth ink of each example was prepared, and the shear rigidity G was tested in the same manner. The amount of change in the shear rigidity G was calculated by the following expression and the texture was evaluated according to the following evaluation criteria. When the evaluation is A, it can be said that a favorable effect can be obtained.

((Shear rigidity G of each example) - (Shear rigidity G of reference)

Determination Criteria

A: The amount of change in shear rigidity G is + 1.5 or less.
C: The amount of change in shear rigidity G is more than + 1.5.

On the other hand, the texture when treated alone was obtained as follows and was shown in Tables 3 and 4.
The medium to be recorded of 100% cotton white broad cloth (#4000, manufactured by Nisshinbo Holdings Inc.) was immersed in the third ink (coating liquid) or the fourth ink (softening liquid) described in each example, and each composition was applied to the cloth using a mangle roller to have a drawing rate of 80%. Thereafter, the cloths were dried at 160°C for 3 minutes to obtain each cloth to which each composition was independently attached.
Further, the drawing rate (S) was calculated by the following expression.

$$S\ (\%) = [(A - B)/B] \times 100$$

In the above expression, S represents the drawing rate (%), A represents the mass of the cloth to which each composition is attached, and B represents the mass of the cloth before the each composition is attached.
Next, for the cloths (cloths after treatment) to which each composition is independently attached, the shear rigidity G (gf/cm/degreed) was tested using a tensile shear tester ("KES-FB1-A" manufactured by Kato Tech Co., Ltd.). In Tables 5 to 9, the "magnitude relationship of fourth ink to third ink" refers to the magnitude relationship of the texture (shear hardness) of the fourth ink (softening liquid) when treated alone to the texture (shear hardness) of the third ink (coating liquid) when treated alone used in each of Examples.

4.2.8. Evaluation of Water Absorptivity

For the printed textile of each example prepared by using the above-described printing method, the time from when the one drop of pure water was added dropwise onto the back side of the printed surface at room temperature until the water droplet permeated into the printed cloth and was not visually observed was measured and evaluated according to the following evaluation criteria.

Determination Criteria

A: The time until the water droplet cannot be visually recognized on the printed textile surface is 5 seconds or shorter.
B: The time until the water droplet cannot be visually recognized on the printed textile surface is longer than 5 seconds.

4.2.9. Evaluation of Mixing and Aggregation Properties With First Ink (Reaction Liquid)

15 mL of the first ink (reaction liquid) is placed in a glass bottle having a volume of 30 mL, and 0.1 mL of the second ink (ink composition), the third ink (coating liquid) or the fourth ink (softening liquid) is added dropwise thereon with a pipette at 25°C. The ink added dropwise is left to stand at 25°C for 1 minute, and then the mixture is shaken and stirred 5 times. When the precipitate or suspended matter can be visually confirmed, it is determined that the mixing and aggregation properties are "confirmed". On the other hand, when it is visually dissolved or diluted, it is determined that the mixing and aggregation properties are "not confirmed". The results are shown in Tables 5 to 9.

4.3. Evaluation Results

In each of Examples in which the softening liquid attachment step of attaching the softening liquid composition containing the softening agent and water to the recording medium, and the coating liquid attachment step of attaching the coating liquid composition containing anionic resin particles and water to the recording medium were provided, the content of the softening agent was 60% by mass or more with respect to the total amount of the non-volatile components in the softening liquid composition, the content of the resin particles was 80% by mass or more with respect to the total amount of the non-volatile components in the coating liquid composition, the coating liquid attachment step was performed by an inkjet method, and the softening liquid attachment step was performed by an ink jet method or a spray method, it was found that recorded matter with good abrasion resistance (wet) of an image and good texture could be obtained.

The present disclosure includes a configuration substantially the same as the configuration described in the embodiment, for example, a configuration having the same function, method, and result, or a configuration having the same purpose and effect. Further, the present disclosure includes configurations in which non-essential parts of the configuration described in the embodiments are replaced. In addition, the present disclosure includes configurations that achieve the same effects or configurations that can achieve the same objects as those of the configurations described in the embodiment. Further, the present disclosure includes configurations in which a known technology is added to the configurations described in the embodiments.

The following contents are derived from the above-described embodiments and modification examples.

A recording method includes

a softening liquid attachment step of attaching a softening liquid composition containing a softening agent and water to a recording medium, and

a coating liquid attachment step of attaching a coating liquid composition containing anionic resin particles and water to the recording medium, in which

a content of the softening agent is 60% by mass or more with respect to a total amount of non-volatile components in the softening liquid composition,

a content of the resin particles is 80% by mass or more with respect to a total amount of non-volatile components in the coating liquid composition,

the coating liquid attachment step is performed by an ink jet method, and

the softening liquid attachment step is performed by an ink jet method or a spray method.

According to this recording method, by attaching the softening liquid composition to a recording medium, the softening agent is attached to the fibers of the recording medium (due to high hydrophobicity), the molecules of the fibers are easily moved, and the hardness of the fibers is reduced. This is because the fibers become more slippery, and in a case of natural fibers, the fibers are prevented from shrinking by inhibiting the bonding between the OH groups of the fibers. Therefore, the texture of the recorded matter can be improved.

On the other hand, since the softening agent is a hydrophobic material, the softening agent has strong affinity with a hydrophobic coloring material such as a pigment and a disperse dye. Therefore, the hydrophobic coloring material is less likely to be incorporated into a fixing resin on the recording medium derived from other compositions. Accordingly, the hydrophobic coloring material easily falls off the recording medium and the wet rubbing fastness tends to deteriorate.

However, according to the recording method, by using the coating liquid in combination, the hydrophobic coloring material exposed on the surface layer of the recording medium is covered with the resin of the coating liquid, and the amount of the resin in the coating liquid is large. Therefore, a resin coating film including a strong coloring material can be formed. Accordingly, the hydrophobic coloring material is less likely to fall off, the wet rubbing fastness of the recorded matter can be improved, and the texture can also be improved.

Such an effect is obtained by being imparted by different attachment steps of the softening liquid and the coating liquid. That is, this is because, when the softening agent and the resin particles are contained in one composition and the softening agent is attached to the recording medium, the softening agent is uniformly mixed with the resin particles in the composition or in the attached liquid droplets, the softening agent enters the coating film of the resin to make the resin network less likely to be formed, and thus the wet rubbing fastness cannot be improved. Therefore, in this recording method, by blending the softening agent and the resin particles in different compositions and separately attaching the softening agent and the resin particles to the recording medium, the softening agent can be prevented from entering the coating film of the resin, and thus both the texture of the recorded matter and the wet rubbing fastness can be achieved.

In the recording method,

the recording medium may be a fabric.

According to the recording method, the above-described effect is remarkably exhibited.

In the recording method,

the softening agent may be at least one selected from particles containing organopolysiloxane, a fatty acid ester, a dialkyldimethylammonium salt, an imidazoline-type surfactant, and an amphoteric surfactant.

According to the recording method, recorded matter having more favorable wet rubbing fastness can be obtained.

In the recording method,

the softening agent may contain particles containing organopolysiloxane.

According to the recording method, since a water repellent effect can be imparted to the fibers of the recording medium, the wet rubbing fastness of the recorded matter can be further improved.

In the recording method,

the organopolysiloxane may be nonionic.

According to the recording method, the yellowing of the recorded matter can be further reduced.

In the recording method,
the coating liquid attachment step may be performed before the softening liquid attachment step, or may be performed at the same time as the softening liquid attachment step.

According to the recording method, the bonding between the coating layer formed by the coating liquid composition and (fibers of) the recording medium is less likely to be inhibited, wet rubbing fastness can be further improved, and color development unevenness of the recorded matter can also be further reduced. This effect is due to the fact that since the softening agent included in the softening liquid composition has hydrophobicity, the bonding between the coating layer and (fibers of) the recording medium easily occurs compared with a case in which the softening liquid is first attached to the recording medium.

The recording method may further include

an ink attachment step of attaching an ink composition containing a pigment and water to the recording medium by an inkjet method, and
a reaction liquid attachment step of attaching a reaction liquid composition containing an aggregating agent that aggregates components of the ink composition, and water to the recording medium by an inkjet method.

According to this recording method, by attaching the softening liquid composition to a recording medium, the softening agent is attached to the fibers of the recording medium (due to high hydrophobicity), the molecules of the fibers are easily moved, and the hardness of the fibers is reduced. This is because the fibers become more slippery, and in a case of natural fibers, the fibers are prevented from shrinking by inhibiting the bonding between the OH groups of the fibers. Therefore, the texture of the recorded matter can be improved. In addition to this effect, the pigment derived from the ink composition exposed on the surface layer of the recording medium is covered with the resin of the coating liquid, and the amount of the resin in the coating liquid is large. Therefore, a resin coating film including a strong pigment can be formed. Accordingly, the pigment is less likely to fall off, and the wet rubbing fastness of the recorded matter can be improved. In addition, the pigment and the like in the ink composition can be aggregated by the aggregating agent of the reaction liquid composition, and the color developability of the recorded matter can also be improved.

In the recording method,
the ink attachment step and the reaction liquid attachment step may be performed before the coating liquid attachment step or at the same time as the coating liquid attachment step.

According to the recording method, the above-described effect of wet rubbing fastness is more remarkably exhibited.

In the recording method,
the reaction liquid attachment step may be performed before the ink attachment step or at the same time as the ink attachment step.

According to the recording method, the effect of the above-described color developability is more remarkably exhibited.

In the recording method,
the coating liquid composition may have aggregation properties due to the aggregating agent, and the softening liquid composition may not have aggregation properties due to the aggregating agent.

According to the recording method, the bleeding of the softening liquid composition on the recording medium can be further suppressed.

In the recording method,
a shear hardness of the softening liquid composition may be smaller than a shear hardness of the coating liquid composition.

According to the recording method, the color developability, bleeding, yellowing, and abrasion resistance (dry) of the recorded matter can be improved.

In the recording method,
an attachment amount of the softening liquid may be 15 $g/m^2$ or more and 80 $g/m^2$ or less.

According to the recording method, the bleeding of the softening liquid can be further suppressed. In addition, since the softening liquid can be applied at the minimum required amount, the original water absorptivity and texture of the recording medium can be appropriately maintained.

In the recording method,
an attachment amount of the coating liquid composition may be 30 $g/m^2$ or more and 60 $g/m^2$ or less.

In the recording method,
a ratio of an attachment amount of the softening liquid to an attachment amount of the coating liquid composition may be 0.25 or more and 1 or less.

According to the recording method, since the softening liquid easily bleeds, the bleeding is less likely to occur when the attachment amount is smaller than that of the coating liquid.

In the recording method,

an area of the recording medium to which the coating liquid composition is applied in the coating liquid attachment step may be larger than an area of the recording medium to which the softening liquid composition is applied in the softening liquid attachment step.

According to the recording method, by making the application region of the underlying coating liquid wider than the application region of the softening liquid, the bleeding of the softening liquid can be further suppressed.

In the recording method,

a content of a coloring material in the softening liquid composition may be 0.1% by mass or less with respect to a total amount of the softening liquid composition.

A composition set includes

a softening liquid composition containing a softening agent and water; and
a coating liquid composition containing anionic resin particles and water, in which
a content of the softening agent is 60% by mass or more with respect to a total amount of non-volatile components in the softening liquid composition,
a content of the resin particles is 80% by mass or more with respect to a total amount of non-volatile components in the coating liquid composition,
the coating liquid composition is used by being discharged by an inkjet method, and
the softening liquid composition is used by being discharged by an ink jet method or a spray method.

According to the composition set, by attaching the softening liquid composition to a recording medium, the softening agent is attached to the fibers of the recording medium (due to high hydrophobicity), the molecules of the fibers are easily moved, and the hardness of the fibers is reduced. This is because the fibers become more slippery, and in a case of natural fibers, the fibers are prevented from shrinking by inhibiting the bonding between the OH groups of the fibers. Therefore, the texture of the recorded matter can be improved.

In addition, according to the composition set, by using the coating liquid in combination, the hydrophobic coloring material exposed on the surface layer of the recording medium is covered with the resin of the coating liquid, and the amount of the resin in the coating liquid is large. Therefore, a resin coating film including a strong coloring material can be formed. Accordingly, the hydrophobic coloring material is less likely to fall off, the wet rubbing fastness of the recorded matter can be improved, and the texture can also be improved.

**Claims**

1. A recording method comprising:

   a softening liquid attachment step of attaching a softening liquid composition containing a softening agent and water to a recording medium; and
   a coating liquid attachment step of attaching a coating liquid composition containing anionic resin particles and water to the recording medium, wherein
   a content of the softening agent is 60% by mass or more with respect to a total amount of non-volatile components in the softening liquid composition,
   a content of the resin particles is 80% by mass or more with respect to a total amount of non-volatile components in the coating liquid composition,
   the coating liquid attachment step is performed by an ink jet method, and
   the softening liquid attachment step is performed by an ink jet method or a spray method.

2. The recording method according to claim 1, wherein
   the recording medium is a fabric.

3. The recording method according to claim 1, wherein
   the softening agent is at least one selected from particles containing organopolysiloxane, a fatty acid ester, a dialkyldimethylammonium salt, an imidazoline-type surfactant, and an amphoteric surfactant.

4. The recording method according to claim 1, wherein
   the softening agent contains particles containing organopolysiloxane.

**5.** The recording method according to claim 4, wherein
the organopolysiloxane is nonionic.

**6.** The recording method according to claim 1, wherein
the coating liquid attachment step is performed before the softening liquid attachment step or at the same time as the softening liquid attachment step.

**7.** The recording method according to claim 1, further comprising:

an ink attachment step of attaching an ink composition containing a pigment and water to the recording medium by an inkjet method; and
a reaction liquid attachment step of attaching a reaction liquid composition containing an aggregating agent that aggregates components of the ink composition, and water to the recording medium by an inkjet method.

**8.** The recording method according to claim 7, wherein
the ink attachment step and the reaction liquid attachment step are performed before the coating liquid attachment step or at the same time as the coating liquid attachment step.

**9.** The recording method according to claim 7, wherein
the reaction liquid attachment step is performed before the ink attachment step or at the same time as the ink attachment step.

**10.** The recording method according to claim 7, wherein
the coating liquid composition has aggregation properties due to the aggregating agent, and the softening liquid composition does not have aggregation properties due to the aggregating agent.

**11.** The recording method according to claim 1, wherein
a shear hardness of the softening liquid composition is smaller than a shear hardness of the coating liquid composition.

**12.** The recording method according to claim 1, wherein
an attachment amount of the softening liquid is 15 g/m$^2$ or more and 80 g/m$^2$ or less.

**13.** The recording method according to claim 1, wherein
an attachment amount of the coating liquid composition is 30 g/m$^2$ or more and 60 g/m$^2$ or less.

**14.** The recording method according to claim 1, wherein
a ratio of an attachment amount of the softening liquid to an attachment amount of the coating liquid composition is 0.25 or more and 1 or less.

**15.** The recording method according to claim 1, wherein
an area of the recording medium to which the coating liquid composition is applied in the coating liquid attachment step is larger than an area of the recording medium to which the softening liquid composition is applied in the softening liquid attachment step.

**16.** The recording method according to claim 1, wherein
a content of a coloring material in the softening liquid composition is 0.1% by mass or less with respect to a total amount of the softening liquid composition.

**17.** A composition set comprising:

a softening liquid composition containing a softening agent and water; and
a coating liquid composition containing anionic resin particles and water, wherein
a content of the softening agent is 60% by mass or more with respect to a total amount of non-volatile components in the softening liquid composition,
a content of the resin particles is 80% by mass or more with respect to a total amount of non-volatile components in the coating liquid composition,
the coating liquid composition is used by being discharged by an inkjet method, and
the softening liquid composition is used by being discharged by an ink jet method or a spray method.

FIG. 1

# FIG. 2

EP 4 474 568 A1

FIG. 3

| ROW | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| CHIP a | THIRD | THIRD | FOURTH | FOURTH | SECOND | SECOND | FIRST | FIRST | FIRST | FIRST | SECOND | SECOND | FOURTH | FOURTH | THIRD | THIRD |
| CHIP b | THIRD | THIRD | FOURTH | FOURTH | SECOND | SECOND | FIRST | FIRST | FIRST | FIRST | SECOND | SECOND | FOURTH | FOURTH | THIRD | THIRD |

# FIG. 4

TABLE 1: FIRST INK (REACTION LIQUID COMPOSITION)     % BY MASS

| | | | ink 1−1 | ink 1−2 | ink 1−3 | ink 1−4 | ink 1−5 | ink 1−6 | ink 1−7 |
|---|---|---|---|---|---|---|---|---|---|
| AGGREGATING AGENT | METAL SALT | MAGNESIUM SULFATE HEPTAHYDRATE | – | 3.0 | 3.0 | 3.0 | – | – | 3.0 |
| | CATIONIC RESIN DISPERSION | CATIONIC ACRYLIC RESIN (Mowinyl 7820, JAPAN COATING RESIN CORPORATION) | 3.0 | – | 3.0 | – | 3.0 | – | – |
| | WATER-SOLUBLE CATIONIC RESIN | POLYALLYLAMINE (PAA−SA, NITTOBO MEDICAL CO., LTD.) | – | – | – | 3.0 | – | – | – |
| | ORGANIC ACID | DL−LACTIC ACID | – | – | – | – | 3.5 | 3.5 | 3.5 |
| MOISTURIZING AGENT | GLYCERIN | | 24.0 | 30.0 | 22.0 | 20.0 | 22.0 | 30.0 | 28.0 |
| SOLVENT | 1,2−HEXANEDIOL | | 0.5 | 0.2 | 0.5 | 0.5 | 0.5 | 0.5 | 0.5 |
| SURFACTANT | OLFINE E1010 | | 0.5 | 0.5 | 0.5 | 0.5 | 0.5 | 0.5 | 0.5 |
| WATER | ION EXCHANGE WATER | | REMAINDER | REMAINDER | REMAINDER | REMAINDER | REMAINDER | REMAINDER | REMAINDER |

*"% BY MASS" IN THE TABLE INDICATES THE VALUE OF THE ACTIVE COMPONENT CONCENTRATION.

EP 4 474 568 A1

# FIG. 5

TABLE 2: SECOND INK (INK COMPOSITION)

| | | | %BY MASS | ink 2-1 | ink 2-2 | ink 2-3 |
|---|---|---|---|---|---|---|
| INK COLOR | | | | Black | Black | Black |
| RESIN DISPERSION | ANIONIC RESIN | POLYCARBONATE-BASED POLYURETHANE (TAKELAC WS-5100, MITSUI CHEMICALS & SKC POLYURETHANES INC.) | | – | 4.0 | 4.0 |
| PIGMENT DISPERSION | ANIONIC SELF-DISPERSING PIGMENT | Black PIGMENT  Carbon black | | 6.0 | 4.0 | – |
| | ANIONIC RESIN DISPERSED PIGMENT | Black PIGMENT  Carbon black | | – | – | 4.0 |
| MOISTURIZING AGENT | GLYCERIN | | | 20.0 | 18.0 | 18.0 |
| SOLVENT | 1,2-HEXANEDIOL | | | 1.0 | 1.0 | 1.0 |
| SURFACTANT | OLFINE E1010 | | | 0.5 | 0.5 | 0.5 |
| WATER | ION EXCHANGE WATER | | | REMAINDER | REMAINDER | REMAINDER |
| NON-VOLATILE COMPONENT CONCENTRATION | | | | 4.0 | 8.0 | 8.0 |
| RESIN PARTICLE COMPONENT CONCENTRATION | | | | 0.0 | 4.0 | 4.0 |
| RATIO OF RESIN PARTICLE COMPONENT CONCENTRATION TO NON-VOLATILE COMPONENT CONCENTRATION | | | | 0.0% | 50.0% | 50.0% |

*"% BY MASS" IN THE TABLE INDICATES THE VALUE OF THE ACTIVE COMPONENT CONCENTRATION.

EP 4 474 568 A1

## FIG. 6

| | | TABLE 3: THIRD INK (COATING LIQUID COMPOSITION)   % BY MASS | ink 3−1 | ink 3−2 | ink 3−3 | ink 3−4 |
|---|---|---|---|---|---|---|
| RESIN DISPERSION | ANIONIC RESIN DISPERSION | POLYCARBONATE-BASED POLYURETHANE (TAKELAC WS−5100, MITSUI CHEMICALS & SKC POLYURETHANES INC.) | 10.0 | 10.0 | 2.0 | − |
| | | ACRYLIC SILICONE HYBRID RESIN (CHALINE E−370, NISSIN CHEMICAL CO., LTD.) | − | − | − | 4.0 |
| WATER-SOLUBLE RESIN | NONIONIC WATER-SOLUBLE RESIN | POLYVINYLPYRROLIDONE (PITZCOL K−17L, DKS CO., LTD.) | − | 2.0 | 5.0 | − |
| MOISTURIZING AGENT | | GLYCERIN | 20.0 | 11.0 | 10.0 | 15.0 |
| SOLVENT | | 1,2−HEXANEDIOL | 1.0 | 1.0 | 1.0 | 1.0 |
| SURFACTANT | | OLFINE E1010 | 0.5 | 0.5 | 0.5 | 0.5 |
| WATER | | ION EXCHANGE WATER | REMAINDER | REMAINDER | REMAINDER | REMAINDER |
| NON-VOLATILE COMPONENT CONCENTRATION | | | 10.0 | 12.0 | 7.0 | 4.0 |
| RESIN PARTICLE COMPONENT CONCENTRATION | | | 10.0 | 10.0 | 2.0 | 4.0 |
| RATIO OF RESIN PARTICLE COMPONENT CONCENTRATION TO NON-VOLATILE COMPONENT CONCENTRATION | | | 100% | 83% | 29% | 100% |
| TEXTURE WHEN TREATED ALONE | | | 10.2 | 11.7 | 10.9 | 4.5 |

*"% BY MASS" IN THE TABLE INDICATES THE VALUE OF THE ACTIVE COMPONENT CONCENTRATION.

EP 4 474 568 A1

# FIG. 7

TABLE 4: FOURTH INK (SOFTENING LIQUID COMPOSITION)

| | | % BY MASS | ink4-1 | ink4-2 | ink4-3 | ink4-4 | ink4-5 | ink4-6 | ink4-7 | ink4-8 | ink4-9 |
|---|---|---|---|---|---|---|---|---|---|---|---|
| SOFTENING AGENT | NONIONIC SILICONE OIL | DIMETHYL SILICONE OIL (KF-96H-10000cs, SHIN-ETSU CHEMICAL CO., LTD.) | – | 7.0 | – | – | – | – | 5.0 | 3.0 | – |
| | CATIONIC SILICONE OIL | AMINO-MODIFIED SILICONE OIL (KF-868, SHIN-ETSU CHEMICAL CO., LTD.) | 7.0 | – | – | – | – | – | – | – | – |
| | FATTY ACID ESTER-BASED | POLYOXYETHYLENE DILAURATE (IONET DL-200, SANYO CHEMICAL INDUSTRIES, LTD.) | – | – | 4.0 | – | – | – | – | – | 5.0 |
| | DIALKYLDIMETHYLAMMONIUM SALT | DIOLEYLDIMETHYLAMMONIUM CHLORIDE (LIPOQUAD 20-75, LION SPECIALTY CHEMICALS CO., LTD.) | – | – | – | 4.0 | – | – | – | – | – |
| | IMIDAZOLINE TYPE SURFACTANT | IMIDAZOLINE TYPE SURFACTANT (CATION SF-10, SANYO CHEMICAL INDUSTRIES, LTD.) | – | – | – | – | 4.0 | – | – | – | – |
| | AMPHOTERIC SURFACTANT | LAURYLDIMETHYLAMINE OXIDE (DMC-W, LION SPECIALTY CHEMICALS CO., LTD.) | – | – | – | – | – | 4.0 | – | – | – |
| EMULSIFIER | NONIONIC SURFACTANT | POLYOXYETHYLENE TRIDECYL ETHER (NEWCOL 1310, NIPPON NYUKAZAI CO., LTD.) | 0.4 | 0.5 | 0.5 | 0.5 | 0.5 | 0.5 | 0.5 | 0.5 | 0.5 |
| | | POLYOXYETHYLENE TRIDECYL ETHER (NEWCOL 1305, NIPPON NYUKAZAI CO., LTD.) | | 0.5 | 0.5 | 0.5 | 0.5 | 0.5 | 0.5 | 0.5 | 0.5 |
| WATER-SOLUBLE RESIN | NONIONIC RESIN | POLYVINYLPYRROLIDONE (PITZCOL K-17L, DKS CO., LTD.) | – | – | – | – | – | – | 2.0 | 4.0 | 2.0 |
| MOISTURIZING AGENT | GLYCERIN | | 20.0 | 20.0 | 25.0 | 25.0 | 25.0 | 25.0 | 15.0 | 9.0 | 25.0 |
| SOLVENT | 1,2-HEXANEDIOL | | 2.0 | 2.0 | 2.0 | 2.0 | 2.0 | 2.0 | 2.0 | 2.0 | 2.0 |
| pH ADJUSTER | LACTIC ACID | | 0.47 | – | 0.47 | 0.47 | 0.47 | 0.47 | – | – | 0.47 |
| WATER | ION EXCHANGE WATER | | REMAINDER | REMAINDER | REMAINDER | REMAINDER | REMAINDER | REMAINDER | REMAINDER | REMAINDER | REMAINDER |
| NON-VOLATILE COMPONENT CONCENTRATION | | | 7.4 | 8.0 | 5.0 | 5.0 | 5.0 | 5.0 | 8.0 | 8.0 | 8.0 |
| SOFTENING AGENT COMPONENT CONCENTRATION | | | 7.0 | 7.0 | 4.0 | 4.0 | 4.0 | 4.0 | 5.0 | 3.0 | 5.0 |
| RATIO OF SOFTENING AGENT COMPONENT CONCENTRATION TO NON-VOLATILE COMPONENT CONCENTRATION | | | 95% | 88% | 80% | 80% | 80% | 80% | 63% | 38% | 63% |
| TEXTURE WHEN TREATED ALONE | | | 1.5 | 1.7 | 2.5 | 1.7 | 1.5 | 1.9 | 3.1 | 4.5 | 4.9 |

* "% BY MASS" IN THE TABLE INDICATES THE VALUE OF THE ACTIVE COMPONENT CONCENTRATION.

## FIG. 8

TABLE 5:

| | | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 |
|---|---|---|---|---|---|---|---|---|---|---|---|
| INK COMPOSITION | | FIRST INK (REACTION LIQUID) | ink 1−1 | ink 1−1 | ink 1−1 | ink 1−1 | ink 1−1 | ink 1−1 | ink 1−2 | ink 1−2 | ink 1−2 |
| | | SECOND INK (COLOR) | ink 2−1 | ink 2−1 | ink 2−1 | ink 2−1 | ink 2−2 | ink 2−2 | ink 2−2 | ink 2−2 | ink 2−2 |
| | | THIRD INK (COATING LIQUID) | ink 3−1 | ink 3−1 | ink 3−1 | ink 3−1 | ink 3−1 | ink 3−1 | ink 3−1 | ink 3−1 | ink 3−1 |
| | | FOURTH INK (SOFTENING LIQUID) | ink 4−1 | ink 4−1 | ink 4−1 | ink 4−1 | ink 4−1 | ink 4−1 | ink 4−2 | ink 4−2 | ink 4−2 |
| INK PROPERTIES | MIXING AND AGGREGATION PROPERTIES WITH FIRST INK | SECOND INK (COLOR) | CONFIRMED | CONFIRMED | CONFIRMED | CONFIRMED | CONFIRMED | CONFIRMED | CONFIRMED | CONFIRMED | CONFIRMED |
| | | THIRD INK (COATING LIQUID) | CONFIRMED | CONFIRMED | CONFIRMED | CONFIRMED | CONFIRMED | CONFIRMED | CONFIRMED | CONFIRMED | CONFIRMED |
| | | FOURTH INK (SOFTENING LIQUID) | NOT CONFIRMED | NOT CONFIRMED | NOT CONFIRMED | NOT CONFIRMED | NOT CONFIRMED | NOT CONFIRMED | NOT CONFIRMED | NOT CONFIRMED | NOT CONFIRMED |
| | TEXTURE WHEN TREATED ALONE (MAGNITUDE RELATIONSHIP OF FOURTH INK TO THIRD INK) | | SMALL | SMALL | SMALL | SMALL | SMALL | SMALL | SMALL | SMALL | SMALL |
| RECORDING METHOD | LANDING ORDER | FIRST INK (REACTION LIQUID) | 1 | 1 | 1 | 1 | 1 | 2 | 2 | 2 | 2 |
| | | SECOND INK (COLOR) | 2 | 2 | 2 | 2 | 2 | 1 | 1 | 1 | 1 |
| | | THIRD INK (COATING LIQUID) | 3 | 3 | 3 | 3 | 3 | 3 | 3 | 3 | 3 |
| | | FOURTH INK (SOFTENING LIQUID) | 4 | 4 | 4 | 4 | 4 | 4 | 4 | 4 | 4 |
| | DRYING STEP BETWEEN APPLICATION OF FIRST AND SECOND INKS AND APPLICATION OF THIRD AND FOURTH INKS | | PROVIDED | NOT PROVIDED | NOT PROVIDED | NOT PROVIDED | NOT PROVIDED | NOT PROVIDED | NOT PROVIDED | NOT PROVIDED | NOT PROVIDED |
| | ELAPSED TIME FROM INITIAL INK LANDING | FIRST INK (REACTION LIQUID) | − | − | − | − | − | 0.3s | 0.3s | 0.3s | 0.3s |
| | | SECOND INK (COLOR) | 0.3s | 0.3s | 0.3s | 0.3s | 0.3s | − | − | − | − |
| | | THIRD INK (COATING LIQUID) | 15min | 10.0s | 10.0s | 10.0s | 10.0s | 10.0s | 10.0s | 10.0s | 10.0s |
| | | FOURTH INK (SOFTENING LIQUID) | 15min0.3s | 5min | 10.3s | 10.3s | 10.3s | 10.3s | 10.3s | 10.3s | 10.3s |
| | APPLICATION AMOUNT | FIRST INK g/m² | 30 | 30 | 30 | 30 | 30 | 30 | 30 | 30 | 30 |
| | | SECOND INK g/m² | 60 | 60 | 60 | 60 | 60 | 60 | 40 | 60 | 90 |
| | | THIRD INK g/m² | 30 | 30 | 30 | 30 | 30 | 30 | 30 | 30 | 30 |
| | | FOURTH INK g/m² | 30 | 80 | 30 | 15 | 15 | 15 | 15 | 15 | 15 |
| | | RATIO (FOURTH INK/THIRD INK) | 1.00 | 2.67 | 1.00 | 0.50 | 0.50 | 0.50 | 0.50 | 0.50 | 0.50 |
| EVALUATION | | COLOR DEVELOPABILITY (BLACK) | A | SS | A | B | C | C | A | S | SS |
| | | BLEEDING | S | C | C | B | B | B | S | A | A |
| | | YELLOWING | B | B | B | B | B | B | A | A | A |
| | | ABRASION RESISTANCE (DRY) | A | B | A | S | S | S | S | S | A |
| | | ABRASION RESISTANCE (WET) | S | S | S | A | S | S | A | B | B |
| | | TEXTURE (SHEAR HARDNESS G) | A | A | A | A | A | A | A | A | A |
| | | WATER ABSORPTIVITY | A | B | A | A | A | A | A | A | A |

**FIG. 9**

TABLE 6:

| | | | EXAMPLE 10 | EXAMPLE 11 | EXAMPLE 12 | EXAMPLE 13 | EXAMPLE 14 | EXAMPLE 15 | EXAMPLE 16 | EXAMPLE 17 |
|---|---|---|---|---|---|---|---|---|---|---|
| INK COMPOSITION | FIRST INK (REACTION LIQUID) | | ink 1−2 | ink 1−2 | ink 1−2 | ink 1−2 | ink 1−2 | ink 1−2 | ink 1−2 | ink 1−2 |
| | SECOND INK (COLOR) | | ink 2−2 | ink 2−2 | ink 2−2 | ink 2−2 | ink 2−2 | ink 2−2 | ink 2−2 | ink 2−2 |
| | THIRD INK (COATING LIQUID) | | ink 3−1 | ink 3−1 | ink 3−1 | ink 3−2 | ink 3−1 | ink 3−1 | ink 3−1 | ink 3−1 |
| | FOURTH INK (SOFTENING LIQUID) | | ink 4−2 | ink 4−2 | ink 4−7 | ink 4−2 | ink 4−1 | ink 4−3 | ink 4−4 | ink 4−5 |
| INK PROPERTIES | MIXING AND AGGREGATION PROPERTIES WITH FIRST INK | SECOND INK (COLOR) | CONFIRMED | CONFIRMED | CONFIRMED | CONFIRMED | CONFIRMED | CONFIRMED | CONFIRMED | CONFIRMED |
| | | THIRD INK (COATING LIQUID) | CONFIRMED | CONFIRMED | CONFIRMED | CONFIRMED | CONFIRMED | CONFIRMED | CONFIRMED | CONFIRMED |
| | | FOURTH INK (SOFTENING LIQUID) | NOT CONFIRMED | NOT CONFIRMED | NOT CONFIRMED | NOT CONFIRMED | NOT CONFIRMED | NOT CONFIRMED | NOT CONFIRMED | NOT CONFIRMED |
| | TEXTURE WHEN TREATED ALONE (MAGNITUDE RELATIONSHIP OF FOURTH INK TO THIRD INK) | | SMALL | SMALL | SMALL | SMALL | SMALL | SMALL | SMALL | SMALL |
| RECORDING METHOD | LANDING ORDER | FIRST INK (REACTION LIQUID) | 2 | 2 | 2 | 2 | 2 | 2 | 2 | 2 |
| | | SECOND INK (COLOR) | 1 | 1 | 1 | 1 | 1 | 1 | 1 | 1 |
| | | THIRD INK (COATING LIQUID) | 3 | 3 | 3 | 3 | 3 | 3 | 3 | 3 |
| | | FOURTH INK (SOFTENING LIQUID) | 4 | 4 | 4 | 4 | 4 | 4 | 4 | 4 |
| | DRYING STEP BETWEEN APPLICATION OF FIRST AND SECOND INKS AND APPLICATION OF THIRD AND FOURTH INKS | | NOT PROVIDED | NOT PROVIDED | NOT PROVIDED | NOT PROVIDED | NOT PROVIDED | NOT PROVIDED | NOT PROVIDED | NOT PROVIDED |
| | ELAPSED TIME FROM INITIAL INK LANDING | FIRST INK (REACTION LIQUID) | 0.3s | 0.3s | 0.3s | 0.3s | 0.3s | 0.3s | 0.3s | 0.3s |
| | | SECOND INK (COLOR) | − | − | − | − | − | − | − | − |
| | | THIRD INK (COATING LIQUID) | 10.0s | 10.0s | 10.0s | 10.0s | 10.0s | 10.0s | 10.0s | 10.0s |
| | | FOURTH INK (SOFTENING LIQUID) | 10.3s | 10.3s | 10.3s | 10.3s | 10.3s | 10.3s | 10.3s | 10.3s |
| | APPLICATION AMOUNT | FIRST INK g/m² | 30 | 30 | 30 | 30 | 30 | 30 | 30 | 30 |
| | | SECOND INK g/m² | 60 | 60 | 60 | 60 | 60 | 60 | 60 | 60 |
| | | THIRD INK g/m² | 30 | 60 | 30 | 30 | 30 | 30 | 30 | 30 |
| | | FOURTH INK g/m² | 30 | 15 | 15 | 15 | 15 | 15 | 15 | 15 |
| | | RATIO (FOURTH INK/THIRD INK) | 1.00 | 0.25 | 0.50 | 0.50 | 0.50 | 0.50 | 0.50 | 0.50 |
| EVALUATION | COLOR DEVELOPABILITY (BLACK) | | SS | S | A | S | SS | S | A | A |
| | BLEEDING | | B | A | S | A | S | A | C | C |
| | YELLOWING | | A | A | A | A | B | B | B | B |
| | ABRASION RESISTANCE (DRY) | | A | S | A | A | S | B | B | B |
| | ABRASION RESISTANCE (WET) | | A | A | B | B | A | B | B | B |
| | TEXTURE (SHEAR HARDNESS G) | | A | A | A | A | A | A | A | A |
| | WATER ABSORPTIVITY | | A | A | A | A | A | A | A | A |

# FIG. 10

TABLE 7:

| | | | EXAMPLE 18 | EXAMPLE 19 | EXAMPLE 20 | EXAMPLE 21 | EXAMPLE 22 | EXAMPLE 23 | EXAMPLE 24 | EXAMPLE 25 |
|---|---|---|---|---|---|---|---|---|---|---|
| INK COMPOSITION | | FIRST INK (REACTION LIQUID) | ink 1-2 | ink 1-3 | ink 1-4 | ink 1-5 | ink 1-6 | ink 1-7 | ink 1-2 | ink 1-2 |
| | | SECOND INK (COLOR) | ink 2-2 | ink 2-1 | ink 2-2 | ink 2-2 | ink 2-2 | ink 2-2 | ink 2-2 | ink 2-2 |
| | | THIRD INK (COATING LIQUID) | ink 3-1 | ink 3-1 | ink 3-1 | ink 3-1 | ink 3-1 | ink 3-1 | ink 3-1 | ink 3-1 |
| | | FOURTH INK (SOFTENING LIQUID) | ink 4-6 | ink 4-1 | ink 4-2 | ink 4-2 | ink 4-2 | ink 4-1 | ink 4-2 | ink 4-2 |
| INK PROPERTIES | MIXING AND AGGREGATION PROPERTIES WITH FIRST INK | SECOND INK (COLOR) | CONFIRMED | CONFIRMED | CONFIRMED | CONFIRMED | CONFIRMED | CONFIRMED | CONFIRMED | CONFIRMED |
| | | THIRD INK (COATING LIQUID) | CONFIRMED | CONFIRMED | CONFIRMED | CONFIRMED | CONFIRMED | CONFIRMED | CONFIRMED | CONFIRMED |
| | | FOURTH INK (SOFTENING LIQUID) | NOT CONFIRMED | NOT CONFIRMED | NOT CONFIRMED | NOT CONFIRMED | NOT CONFIRMED | NOT CONFIRMED | NOT CONFIRMED | NOT CONFIRMED |
| | TEXTURE WHEN TREATED ALONE (MAGNITUDE RELATIONSHIP OF FOURTH INK TO THIRD INK) | | SMALL | SMALL | SMALL | SMALL | SMALL | SMALL | SMALL | SMALL |
| RECORDING METHOD | LANDING ORDER | FIRST INK (REACTION LIQUID) | 2 | 2 | 2 | 2 | 2 | 2 | 1 | 3 |
| | | SECOND INK (COLOR) | 1 | 1 | 1 | 1 | 1 | 1 | 2 | 2 |
| | | THIRD INK (COATING LIQUID) | 3 | 3 | 3 | 3 | 3 | 3 | 3 | 1 |
| | | FOURTH INK (SOFTENING LIQUID) | 4 | 4 | 4 | 4 | 4 | 4 | 4 | 4 |
| | DRYING STEP BETWEEN APPLICATION OF FIRST AND SECOND INKS AND APPLICATION OF THIRD AND FOURTH INKS | | NOT PROVIDED | NOT PROVIDED | NOT PROVIDED | NOT PROVIDED | NOT PROVIDED | NOT PROVIDED | NOT PROVIDED | NOT PROVIDED |
| | ELAPSED TIME FROM INITIAL INK LANDING | FIRST INK (REACTION LIQUID) | 0.3s | 0.3s | 0.3s | 0.3s | 0.3s | 0.3s | – | 0.6s |
| | | SECOND INK (COLOR) | – | – | – | – | – | – | 10.0s | 0.3s |
| | | THIRD INK (COATING LIQUID) | 10.0s | 10.0s | 10.0s | 10.0s | 10.0s | 10.0s | 20.0s | – |
| | | FOURTH INK (SOFTENING LIQUID) | 10.3s | 10.3s | 10.3s | 10.3s | 10.3s | 10.3s | 30.0s | 10.0s |
| | APPLICATION AMOUNT | FIRST INK g/m² | 30 | 30 | 30 | 30 | 30 | 30 | 30 | 30 |
| | | SECOND INK g/m² | 60 | 60 | 60 | 60 | 60 | 60 | 60 | 60 |
| | | THIRD INK g/m² | 30 | 30 | 30 | 30 | 30 | 30 | 30 | 30 |
| | | FOURTH INK g/m² | 15 | 15 | 15 | 15 | 15 | 15 | 15 | 15 |
| | | RATIO (FOURTH INK/THIRD INK) | 0.50 | 0.50 | 0.50 | 0.50 | 0.50 | 0.50 | 0.50 | 0.50 |
| EVALUATION | | COLOR DEVELOPABILITY (BLACK) | A | SS | SS | SS | S | SS | A | A |
| | | BLEEDING | C | S | S | A | B | S | S | B |
| | | YELLOWING | A | B | A | A | A | B | A | A |
| | | ABRASION RESISTANCE (DRY) | B | S | S | S | S | S | S | A |
| | | ABRASION RESISTANCE (WET) | B | S | A | S | S | S | B | B |
| | | TEXTURE (SHEAR HARDNESS G) | A | A | A | A | A | A | A | A |
| | | WATER ABSORPTIVITY | A | A | A | A | A | A | A | A |

FIG. 11 TABLE 8:

| | | | EXAMPLE 26 | EXAMPLE 27 | EXAMPLE 28 | EXAMPLE 29 | EXAMPLE 30 | EXAMPLE 31 |
|---|---|---|---|---|---|---|---|---|
| INK COMPOSITION | FIRST INK (REACTION LIQUID) | | ink 1−2 | ink 1−2 | ink 1−2 | ink 1−2 | ink 1−2 | ink 1−2 |
| | SECOND INK (COLOR) | | ink 2−2 | ink 2−2 | ink 2−3 | ink 2−2 | ink 2−2 | ink 2−2 |
| | THIRD INK (COATING LIQUID) | | ink 3−1 | ink 3−1 | ink 3−1 | ink 3−1 | ink 3−1 | ink 3−4 |
| | FOURTH INK (SOFTENING LIQUID) | | ink 4−2 | ink 4−2 | ink 4−2 | ink 4−2 | ink 4−2 | ink 4−9 |
| INK PROPERTIES | MIXING AND AGGREGATION PROPERTIES WITH FIRST INK | SECOND INK (COLOR) | CONFIRMED | CONFIRMED | CONFIRMED | CONFIRMED | CONFIRMED | CONFIRMED |
| | | THIRD INK (COATING LIQUID) | CONFIRMED | CONFIRMED | CONFIRMED | CONFIRMED | CONFIRMED | CONFIRMED |
| | | FOURTH INK (SOFTENING LIQUID) | NOT CONFIRMED | NOT CONFIRMED | NOT CONFIRMED | NOT CONFIRMED | NOT CONFIRMED | NOT CONFIRMED |
| | TEXTURE WHEN TREATED ALONE (MAGNITUDE RELATIONSHIP OF FOURTH INK TO THIRD INK) | | SMALL | SMALL | SMALL | SMALL | SMALL | LARGE |
| RECORDING METHOD | LANDING ORDER | FIRST INK (REACTION LIQUID) | 2 | 2 | 2 | 2 | 2 | 2 |
| | | SECOND INK (COLOR) | 1 | 1 | 1 | 1 | 3 | 1 |
| | | THIRD INK (COATING LIQUID) | 3 | 4 | 3 | 3 | 4 | 3 |
| | | FOURTH INK (SOFTENING LIQUID) | 4 | 3 | 4 | 4 | 1 | 4 |
| | DRYING STEP BETWEEN APPLICATION OF FIRST AND SECOND INKS AND APPLICATION OF THIRD AND FOURTH INKS | | NOT PROVIDED | NOT PROVIDED | NOT PROVIDED | NOT PROVIDED | NOT PROVIDED | NOT PROVIDED |
| | ELAPSED TIME FROM INITIAL INK LANDING | FIRST INK (REACTION LIQUID) | 0.3s | 0.3s | 0.3s | 0.3s | 10.0s | 0.3s |
| | | SECOND INK (COLOR) | − | − | − | − | 10.3s | − |
| | | THIRD INK (COATING LIQUID) | 10.0s | 10.3s | 10.0s | 10.0s | 20.0s | 10.0s |
| | | FOURTH INK (SOFTENING LIQUID) | 20.0s | 10.0s | 10.3s | 10.3s | − | 10.3s |
| | APPLICATION AMOUNT | FIRST INK g/m² | 30 | 30 | 30 | 30 | 30 | 30 |
| | | SECOND INK g/m² | 60 | 60 | 60 | 60 | 60 | 60 |
| | | THIRD INK g/m² | 30 | 30 | 30 | 30 | 30 | 30 |
| | | FOURTH INK g/m² | 15 | 15 | 15 | 15 | 15 | 15 |
| | | RATIO (FOURTH INK/THIRD INK) | 0.50 | 0.50 | 0.50 | 0.50 | 0.50 | 0.50 |
| EVALUATION | COLOR DEVELOPABILITY (BLACK) | | SS | A | B | S | B | A |
| | BLEEDING | | A | A | B | S | C | B |
| | YELLOWING | | A | A | A | A | A | B |
| | ABRASION RESISTANCE (DRY) | | S | S | S | S | C | A |
| | ABRASION RESISTANCE (WET) | | A | B | S | B | B | B |
| | TEXTURE (SHEAR HARDNESS G) | | A | A | A | A | A | A |
| | WATER ABSORPTIVITY | | A | A | A | A | A | A |

FIG. 12

TABLE 9:

| | | | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 |
|---|---|---|---|---|---|---|---|---|
| INK COMPOSITION | FIRST INK (REACTION LIQUID) | | ink1-1 | ink1-1 | ink1-2 | ink1-2 | ink1-2 | ink1-2 |
| | SECOND INK (COLOR) | | ink2-1 | ink2-1 | ink2-2 | ink2-2 | ink2-2 | ink2-2 |
| | THIRD INK (COATING LIQUID) | | ink3-1 | – | ink3-1 | – | ink3-1 | ink3-3 |
| | FOURTH INK (SOFTENING LIQUID) | | – | ink4-1 | – | ink4-2 | ink4-8 | ink4-2 |
| INK PROPERTIES | MIXING AND AGGREGATION PROPERTIES WITH FIRST INK | SECOND INK (COLOR) | CONFIRMED | CONFIRMED | CONFIRMED | CONFIRMED | CONFIRMED | CONFIRMED |
| | | THIRD INK (COATING LIQUID) | CONFIRMED | – | CONFIRMED | – | CONFIRMED | CONFIRMED |
| | | FOURTH INK (SOFTENING LIQUID) | – | NOT CONFIRMED | – | NOT CONFIRMED | NOT CONFIRMED | NOT CONFIRMED |
| | TEXTURE WHEN TREATED ALONE (MAGNITUDE RELATIONSHIP OF FOURTH INK TO THIRD INK) | | – | – | – | – | SMALL | SMALL |
| RECORDING METHOD | LANDING ORDER | FIRST INK (REACTION LIQUID) | 1 | 1 | 2 | 2 | 2 | 2 |
| | | SECOND INK (COLOR) | 2 | 2 | 1 | 1 | 1 | 1 |
| | | THIRD INK (COATING LIQUID) | 3 | – | 3 | – | 3 | 3 |
| | | FOURTH INK (SOFTENING LIQUID) | – | 4 | – | 3 | 4 | 4 |
| | DRYING STEP BETWEEN APPLICATION OF FIRST AND SECOND INKS AND APPLICATION OF THIRD AND FOURTH INKS | | PROVIDED | PROVIDED | NOT PROVIDED | NOT PROVIDED | NOT PROVIDED | NOT PROVIDED |
| | ELAPSED TIME FROM INITIAL INK LANDING | FIRST INK (REACTION LIQUID) | – | – | 0.3s | 0.3s | 0.3s | 0.3s |
| | | SECOND INK (COLOR) | 0.3s | 0.3s | – | – | – | – |
| | | THIRD INK (COATING LIQUID) | 15min | – | 10.0s | – | 10.0s | 10.0s |
| | | FOURTH INK (SOFTENING LIQUID) | – | 15min0.3s | – | 10.0s | 10.3s | 10.3s |
| | APPLICATION AMOUNT | FIRST INK g/m² | 30 | 30 | 30 | 30 | 30 | 30 |
| | | SECOND INK g/m² | 60 | 60 | 60 | 60 | 60 | 60 |
| | | THIRD INK g/m² | 30 | – | 30 | – | 30 | 30 |
| | | FOURTH INK g/m² | – | 30 | – | 15 | 15 | 15 |
| | | RATIO (FOURTH INK/THIRD INK) | – | – | – | – | 0.50 | 0.50 |
| EVALUATION | COLOR DEVELOPABILITY (BLACK) | | C | A | B | S | B | S |
| | BLEEDING | | S | S | A | A | S | A |
| | YELLOWING | | A | B | A | A | A | A |
| | ABRASION RESISTANCE (DRY) | | S | C | S | C | A | B |
| | ABRASION RESISTANCE (WET) | | S | C | B | C | B | C |
| | TEXTURE (SHEAR HARDNESS G) | | C | A | C | A | C | A |
| | WATER ABSORPTIVITY | | A | A | A | A | A | A |

Europäisches
Patentamt

European
Patent Office

Office européen
des brevets

# EUROPEAN SEARCH REPORT

Application Number

EP 24 17 9213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/317942 A1 (YAMADA MINORU [JP]) 8 October 2020 (2020-10-08) * paragraph [0148]; tables 3,4 * ----- | 1-17 | INV.<br>D06P1/44<br>B41M5/00<br>C09D11/40<br>C09D11/54<br>D06P1/52<br>D06P5/00<br>D06P5/06<br>D06P5/08<br>D06P5/30 |
| | | | TECHNICAL FIELDS SEARCHED (IPC)<br><br>D06P<br>C09D<br>B41M |

The present search report has been drawn up for all claims

| Place of search | Date of completion of the search | Examiner |
|---|---|---|
| The Hague | 25 October 2024 | Massella, Daniele |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 17 9213

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2024

| Patent document cited in search report | | Publication date | Patent family member(s) | | Publication date |
|---|---|---|---|---|---|
| US 2020317942 | A1 | 08-10-2020 | CN | 111417689 A | 14-07-2020 |
| | | | EP | 3719083 A1 | 07-10-2020 |
| | | | JP | 7208580 B2 | 19-01-2023 |
| | | | JP | 2019099790 A | 24-06-2019 |
| | | | US | 2020317942 A1 | 08-10-2020 |

EPO FORM P0459

For more details about this annex : see Official Journal of the European Patent Office, No. 12/82

**EP 4 474 568 A1**

**REFERENCES CITED IN THE DESCRIPTION**

**Patent documents cited in the description**

- JP 2023091587 A

- JP 2022003175 A